(19)

Europäisches
Patentamt
European
Patent Office
Office européen
des brevets

(11) **EP 4 369 820 A1**

(12) **EUROPEAN PATENT APPLICATION**
published in accordance with Art. 153(4) EPC

(43) Date of publication:
**15.05.2024 Bulletin 2024/20**

(21) Application number: **22836897.3**

(22) Date of filing: **05.07.2022**

(51) International Patent Classification (IPC):
**H04W 72/04** (2023.01)

(52) Cooperative Patent Classification (CPC):
**H04L 5/16; H04W 72/04; H04W 72/0446;
H04W 72/541**

(86) International application number:
**PCT/CN2022/103828**

(87) International publication number:
**WO 2023/280146 (12.01.2023 Gazette 2023/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.07.2021 CN 202110779270**

(71) Applicant: **Vivo Mobile Communication Co., Ltd.
Dongguan, Guangdong 523863 (CN)**

(72) Inventors:
• YUAN, Pu
  Dongguan, Guangdong 523863 (CN)
• JIANG, Dajie
  Dongguan, Guangdong 523863 (CN)
• YAO, Jian
  Dongguan, Guangdong 523863 (CN)

(74) Representative: **Murgitroyd & Company
165-169 Scotland Street
Glasgow G5 8PL (GB)**

(54) **TRANSMISSION METHOD AND APPARATUS, COMMUNICATION DEVICE, AND STORAGE MEDIUM**

(57) This application discloses a transmission method and apparatus, a communication device, and a storage medium and pertains to the field of communication technologies. The transmission method according to embodiments of this application includes: determining, by a communication device, a communication frame for transmitting a target signal, where the communication frame includes a first portion for transmitting a target signal and a second portion for receiving a sensing signal, the sensing signal is an echo signal for the target signal; transmitting, by the communication device, the target signal within the first portion of the communication frame; and receiving, by the communication device, the sensing signal within the second portion of the communication frame.

FIG. 8

EP 4 369 820 A1

**Description**

**CROSS-REFERENCE TO RELATED APPLICATION**

This application claims priority to Chinese Patent Application No. 202110779270.7, filed on July 09, 2021, and entitled "TRANSMISSION METHOD AND APPARATUS, COMMUNICATION DEVICE, AND STORAGE MEDIUM", which is incorporated herein by reference in its entirety.

**TECHNICAL FIELD**

This application pertains to the field of communication technologies, and specifically, relates to a transmission method and apparatus, a communication device, and a storage medium.

**BACKGROUND**

Through a protocol stack based on the integrated sensing and communication (Integrated sensing and communication, ISAC) technology, future communication devices integrate dual functions of communication and sensing, which allows for hardware sharing, frequency spectrum sharing, and protocol interoperability between communication and sensing signals, enabling the integrated design of communication and sensing functions.

Most current ISAC system designed still tend to keep radar sensing signals and communication reference signals working independently. Even for hardware capable of both communication and sensing, the functions of communication and sensing are still designed to be independent of each other, leading to interference between communication signals and sensing signals and resulting in large resource overheads.

**SUMMARY**

Embodiments of this application provide a transmission method and apparatus, a communication device, and a storage medium, so as to resolve the problems of interference between communication signals and sensing signals and large resource overheads.

According to a first aspect, a transmission method is provided, where the method includes:

determining, by a communication device, a communication frame for transmitting a target signal, where the communication frame includes a first portion for transmitting a target signal and a second portion for receiving a sensing signal, the sensing signal is an echo signal for the target signal;

transmitting, by the communication device, the target signal within the first portion of the communication frame; and

receiving, by the communication device, the sensing signal within the second portion of the communication frame.

According to a second aspect, a transmission apparatus is provided, where the apparatus includes:

a first determining module, configured to determine a communication frame for transmitting a target signal, where the communication frame includes a first portion for transmitting a target signal and a second portion for receiving a sensing signal, the sensing signal is an echo signal for the target signal;

a first transmitting module, configured to transmit the target signal within the first portion of the communication frame; and

a first receiving module, configured to receive the sensing signal within the second portion of the communication frame.

According to a third aspect, a communication device is provided, where the terminal includes a processor, a memory, and a program or instructions stored in the memory and executable on the processor, and when the program or the instructions are executed by the processor, the steps of the method according to the first aspect are implemented.

According to a fourth aspect, a communication device is provided, including a processor and a communication interface, where the processor is configured to transmit a communication frame of a target signal, and the communication frame includes a first portion for transmitting a target signal and a second portion for receiving a sensing signal, the sensing signal is an echo signal for the target signal; and the communication interface is configured to transmit the target signal within the first portion of the communication frame; and receive the sensing signal within the second portion of the communication frame.

According to a fifth aspect, a readable storage medium is provided, where a program or instructions are stored in the readable storage medium, and when the program or the instructions are executed by a processor, the steps of the method according to the first aspect are implemented.

According to a sixth aspect, a chip is provided, where the chip includes a processor and a communication interface, the communication interface is coupled to the processor, and the processor is configured to run a program or instructions to implement the steps of the method according to the first aspect.

According to a seventh aspect, a computer program/program product is provided, where the computer program/program product is stored in a non-transitory storage medium, and the program/program product is executed by at least one processor to implement the steps of the method according to the first aspect.

In the embodiments of this application, the target signal transmitted for communication is considered as both a communication signal and sensing information, and a new communication frame structure is defined for transmission of the target signal, so as to implement that communication and sensing share a protocol stack, radio frequency, and frequency spectrum and operate in a half-duplex mode, avoiding interference between the communication signal and the sensing signal. This also implements a compact ISAC frame structure, reducing communication overheads and resources.

## BRIEF DESCRIPTION OF DRAWINGS

FIG. 1 is a block diagram of a wireless communications system to which the embodiments of this application are applicable;

FIG. 2 is a schematic diagram of inter-transformation between a delay-Doppler plane and a time-frequency plane according to an embodiment of this application;

FIG. 3 is a schematic diagram of a channel response relationship on different planes according to an embodiment of this application;

FIG. 4 is a schematic flowchart of processing at transmitter and receiver ends of an OTFS multicarrier system according to an embodiment of this application;

FIG. 5 is a schematic diagram of pilot mapping in a delay-Doppler domain according to an embodiment of this application;

FIG. 6 is a schematic diagram of mapping of a multiport reference signal in a delay-Doppler domain according to an embodiment of this application;

FIG. 7 is a schematic diagram of detection of a pilot sequence according to an embodiment of this application;

FIG. 8 is a schematic flowchart of a transmission method according to an embodiment of this application;

FIG. 9 is a schematic diagram of an impact of MN on received SNR of a sensing signal according to an embodiment of this application;

FIG. 10 is a schematic diagram of an impact of MN on target detection performance according to an embodiment of this application;

FIG. 11 is a flowchart of ISAC signal processing based on OTFS modulation;

FIG. 12 is a schematic diagram of symbol mapping according to an embodiment of this application;

FIG. 13 is a first schematic diagram of a position of a second portion according to an embodiment of this application;

FIG. 14 is a schematic diagram of a frame forming form in a beam initialization phase according to an embodiment of this application;

FIG. 15 is a schematic diagram of an ISB and an ISB set according to an embodiment of this application;

FIG. 16 is a schematic diagram of a frame forming form after beam determining according to an embodiment of this application;

FIG. 17 is a second schematic diagram of a position of a second portion according to an embodiment of this application;

FIG. 18 is a schematic structural diagram of a transmission apparatus according to an embodiment of this application;

FIG. 19 is a schematic structural diagram of a communication device according to an embodiment of this application;

FIG. 20 is a schematic diagram of a hardware structure of a terminal for implementing the embodiments of this application; and

FIG. 21 is a schematic diagram of a hardware structure of a network-side device for implementing the embodiments of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, a first object may be one or multiple. In addition, "and/or" in this specification and claims indicates at least one of connected objects, and the symbol "/" generally indicates that the associated objects are in an "or" relationship.

It should be noted that technologies described in the embodiments of this specification are not limited to a long term evolution (Long Term Evolution, LTE) or LTE-Advanced (LTE-Advanced, LTE-A) system, and may also be applied to other wireless communications systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communications system.

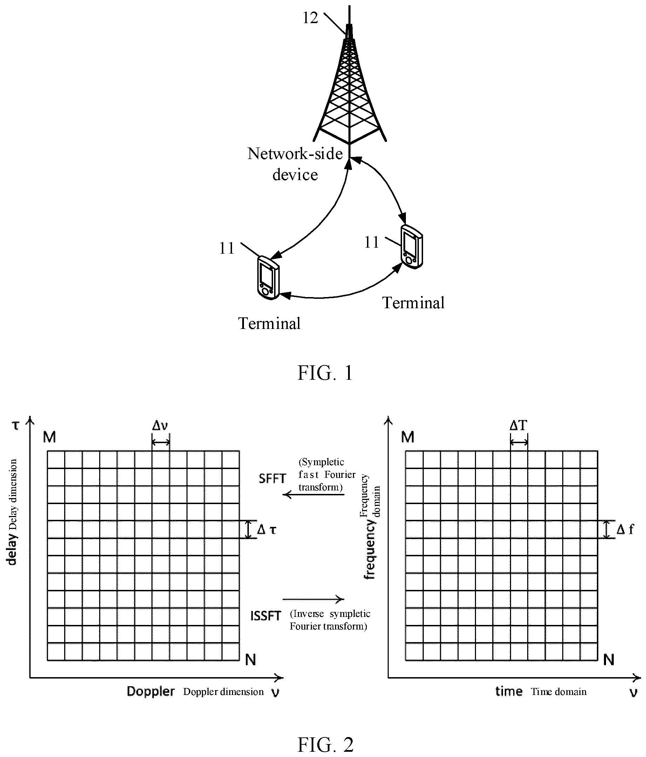

FIG. 1 is a block diagram of a wireless communications system to which the embodiments of this application are applicable. The wireless communications system includes a terminal 11 and a network-side device 12. The terminal 11 may also be referred to as a terminal device or user terminal (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), and a smart home device (a home device with wireless communication function, such as refrigerator, TV, washing machine, or furniture). The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, game console, and the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The following content is first described:

1. OTFS communication technology

The delay-Doppler characteristics of channels are essentially determined by the multipath channel. Signals arriving at a receiver via different paths have different arrival times because of differences in distance traveled. For example, if two echoes $s_1$ and $s_2$ travel distances $d_1$ and $d_2$ respectively to arrive at the receiver, a time difference for

$$\Delta t = \frac{|d_1 - d_2|}{c}$$

arriving at the receiver is , where $c$ is a speed of light. Due to such time difference between the echoes $s_1$ and $s_2$, incoherent superposition of the echoes on the receiver side causes amplitude jitter of an observed signal, that is, fading effect. Similarly, Doppler spread in multipath channels is caused by the multipath effect.

The Doppler effect is due to presence of a relative velocity between the transmitter and receiver ends, and signals arriving at the receiver via different paths have differences in their angles of incidence with respect to the antenna normal, thus causing difference in the relative velocity, and further leading to different Doppler shifts for signals on different paths. Assuming that an original frequency of the signal is $f_0$, the relative velocity between the transmitter and receiver ends is $\Delta v$ and the angle of incidence of the signal with respect to the antenna normal at the receiver end is $\theta$,

then $\Delta f = \frac{\Delta v}{f}\cos\theta$ . It is clear that when the two echoes $S_1$ and $S_2$ reach the antenna at the receiver end through different paths with different angles of incidence $\theta_1$ and $\theta_2$ respectively, the obtained Doppler shifts $\Delta f_1$ and $\Delta f_2$ are also different.

In summary, a signal seen at the receiver end is obtained through superposition of component signals from different paths with different delays and Dopplers, which is overall reflected as a received signal with fading and frequency shift relative to an original signal. Delay-Doppler analysis of the channel helps collect delay-Doppler information for each path, thus reflecting a delay-Doppler response of the channel.

The full name of the OTFS modulation technique is orthogonal time frequency space domain (Orthogonal Time Frequency) modulation. This technique logically maps information in a packet of size $M \times N$, for example, QAM (Quadrature Amplitude Modulation) symbols, into $M \times N$ grid points on the two-dimensional delay-Doppler plane, that is, pulse within each grid point modulate one QAM symbol in the packet.

Further, a data set of $M \times N$ on the delay-Doppler domain plane can be transformed to $N \times M$ on the time-frequency domain plane by designing a set of orthogonal two-dimensional basis functions, where such transformation is mathematically known as inverse sympletic Fourier transform (Inverse Sympletic Fourier Transform, ISFFT).

Correspondingly, transformation from the time-frequency domain to the delay-Doppler domain is known as sympletic fast Fourier transform (Sympletic Fourier Transform, SFFT). The physical meaning behind this is that the delay-Doppler effect of signals is actually a linear superposition effect of a series of echoes with different time and frequency offsets of a signal passing through a multipath channel. That is, delay-Doppler analysis and time-frequency domain analysis can be obtained by inter-transformation of ISFFT and SFFT as described.

FIG. 2 is a schematic diagram of the inter-transformation between the delay-Doppler plane and the time-frequency plane according to an embodiment of this application. As shown in FIG. 2, the OTFS technique can transform a time-varying multipath channel into a time-invariant two-dimensional delay-Doppler-domain channel (within a specific duration), thereby directly representing channel delay-Doppler response characteristics in the radio link caused by geometrical characteristics of a relative position of the reflector between the transmitter and receiver. This has the following three advantages:

(a) Invariance of a channel coupling state. As delay-Doppler of the signal reflects a direct effect of the reflector in the physical channel, which solely depends on the relative velocity and position of the reflector, the delay-Doppler response of the signal can be considered invariant on the time scale of radio frame.

(b) Separability of a channel coupling state. All diversity paths in the channel frequency response in the delay-Doppler domain are embodied as a single shock response and are completely separable. The QAM symbol traverses all the hierarchical paths.

(c) Orthogonality of a channel coupling state. Because a channel shock response in the delay-Doppler domain is confined to one delay-Doppler domain resource element, there are theoretically no delay-Doppler IDIs (inter delay/Doppler interference) at the receiver end.

Due to the above characteristics, the delay-Doppler domain analysis eliminates the difficulty of tracking time-varying fading characteristics in the conventional time-frequency domain analysis, and instead extracts all diversity characteristics of the channel in the time-frequency domain by analyzing the time-invariant delay-Doppler channel, so as to obtain through calculation the transformation relationship between the delay-Doppler domain and the time-frequency domain. In practical systems, the number of delay paths and Doppler frequency shifts of the channel is much smaller than the number of time-domain and frequency-domain responses of the channel, and a channel characterized by delay-Doppler domain is more concise. Therefore, analysis in the delay-Doppler domain using the OTFS technique allows for more compact and flexible encapsulation of the reference signal, which is especially beneficial for supporting massive antenna arrays in massive MIMO systems.

The core of OTFS modulation is QAM symbols defined on the delay-Doppler plane, which are transformed to the time-frequency domain for transmission, and then processed at the receiver end back to the delay-Doppler domain. Thus, a radio channel response analysis method in the delay-Doppler domain can be introduced.

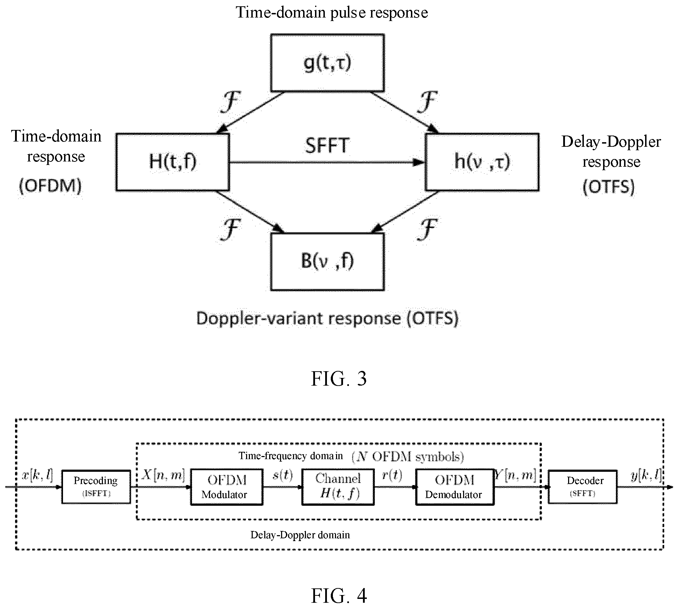

FIG. 3 is a schematic diagram of a channel response relationship on different planes according to an embodiment of this application. As shown in FIG. 3, it represents a relationship between expressions of a channel response on different planes when a signal passes through a linear time-varying radio channel.

In FIG. 3, an SFFT transform equation is:

$$h(\tau,\nu) = \iint H(t,f) e^{-j2\pi(\nu t - f\tau)} d\tau d\nu \qquad (1)$$

Correspondingly, an ISFFT transform equation is:

$$H(t,f) = \iint h(\tau,v)e^{j2\pi(vt-f\tau)}d\tau dv \qquad (2)$$

When the signal passes through a linear time-varying channel, a received signal in time domain is *r(t)*, its corresponding received signal in frequency domain is *R(f)*, and $r(t) = \mathcal{F}^{-1}\{R(f)\}$ . *r(t)* may be expressed in the following form:

$$r(t) = s(t)*h(t) = \int g(t,\tau)s(t-\tau)d\tau \qquad (3)$$

Based on the relationship in FIG. 3, it can be learned that:

$$g(t,\tau) = \int h(v,\tau)e^{j2\pi vt}dv \qquad (4)$$

Substituting (4) into (3) yields:

$$r(t) = \iint h(v,\tau)s(t-\tau)e^{j2\pi vt}d\tau dv \qquad (5)$$

Based on the relationship shown in FIG. 3, the classical Fourier transform theory, and equation (5), it can be learned that:

$$\begin{aligned}
r(t) &= \iint h(v,\tau)\left(\int S(f)e^{j2\pi f(t-\tau)}df\right)e^{j2\pi vt}d\tau dv \\
&= \int\left(\iint h(v,\tau)e^{j2\pi(vt-f\tau)}d\tau dv\right)S(f)e^{j2\pi ft}df \\
&= \int H(t,f)S(f)e^{j2\pi ft}df \\
&= \mathcal{F}^{-1}\{R(f)\}
\end{aligned} \qquad (6)$$

Based on equation (6), it can be learned that analysis in the delay-Doppler domain in the OTFS system can be implemented by relying on a communication framework built on the time-frequency domain and by adding an additional signal processing process at the transmitter and receiver ends. Moreover, the additional signal processing includes only Fourier transform, which can be fully implemented by the existing hardware without requiring new modules.

In practice systems, the OTFS technique can be implemented as pre- and post-processing modules of a filtered orthogonal frequency division multiplexing (Orthogonal frequency division multiplexing, OFDM) system, and thus has good compatibility with existing communication technology architectures, such as multicarrier systems in the NR technology architecture.

When the OTFS is combined with a multicarrier system, the transmitter end is implemented as follows: a QAM symbol containing information to be sent is carried by a waveform on the delay-Doppler plane, which is transformed into a waveform in the time-frequency domain of a conventional multicarrier system through two-dimensional inverse sympletic finite Fourier transform (Inverse Sympletic Finite Fourier Transform, ISFFT), and then transformed into time-domain sample points through symbol-level one-dimensional inverse fast Fourier transform (Inverse Fast Fourier Transform, IFFT) and series-parallel conversion and then sent out.

FIG. 4 is a schematic flowchart of processing at transmitter and receiver ends of an OTFS multicarrier system according to an embodiment of this application. As shown in FIG. 4, the receiver end of the OTFS system is roughly an inverse process of the transmitter end: time-domain sampling points are received by the receiver, then transformed to a waveform in the time-frequency domain through parallel-series conversion and symbol-level one-dimensional fast Fourier transform (Fast Fourier Transform, FFT), and then transformed to a waveform in the delay-Doppler domain through two-dimensional sympletic finite Fourier transform (Sympletic Finite Fourier Transform, SFFT). Then, QAM symbols carried by the delay-Doppler domain waveform are processed at the receiver, including channel estimation and equalization, demodulation and decoding, and so on.

The advantages of OTFS modulation are mainly reflected in the following aspects:

(a) OTFS modulation transforms a time-varying fading channel in the time-frequency domain between the transceiver and the receiver into a deterministic fading-free channel in the delay-Doppler domain. In the delay-Doppler domain, each symbol in a set of information symbols sent at a time experiences the same static channel response and SNR. (b) The OTFS system resolves a reflector in the physical channel using delay-Doppler images and coherently combines energy from different reflection paths using a receiver equalizer, effectively providing a fading-free static channel response. With the static channel characteristics, the OTFS system does not need to introduce closed-loop channel adaptation to cope with the fast changing channel as in the OFDM system, thus improving system robustness and reducing complexity of system design.

Because the number of delay-Doppler states in the delay-Doppler domain is much smaller than the number of time-frequency states in the time-frequency domain, the channel in the OTFS system can be expressed in a very compact form. Channel estimation of the OTFS system features much fewer overheads and is more accurate.

Another advantage of the OTFS is reflected in the response to the extreme Doppler channel. Through analysis on delay-Doppler images with appropriate signal processing parameters, the Doppler characteristics of the channel are presented in their entirety, thus facilitating signal analysis and processing in Doppler-sensitive scenarios (such as high-speed motion and millimeter waves).

Therefore, a new approach can be used for channel estimation in the OTFS system. The transmitter maps pilot pulses onto the delay-Doppler domain, and the receiver obtains through estimation a channel response $h(v, \tau)$ in the delay-Doppler domain through delay-Doppler image analysis of the pilot, so as to further obtain an expression of channel response in the time-frequency domain based on the relation in FIG. 3, facilitating signal analysis and processing.

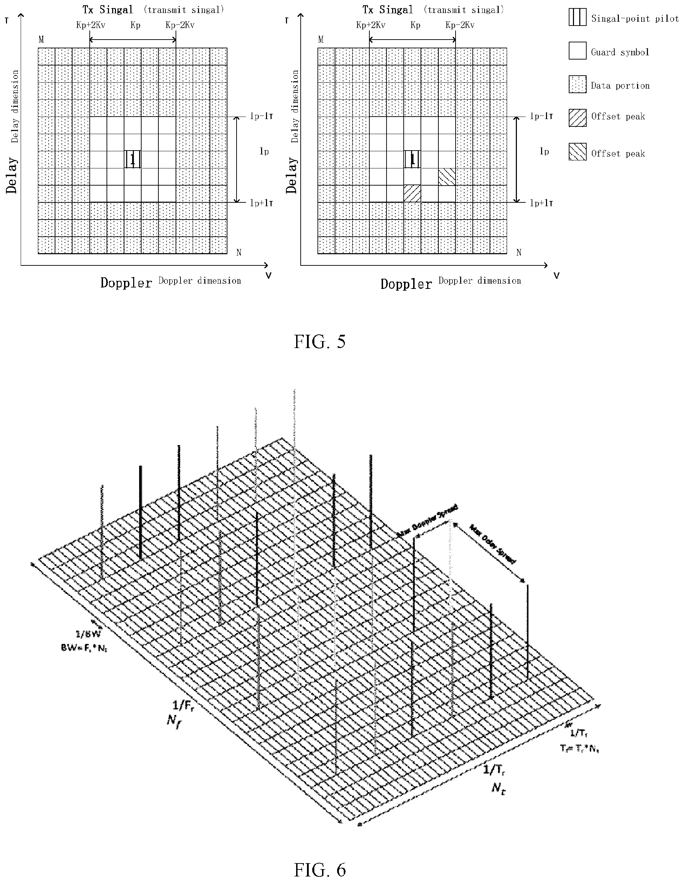

FIG. 5 is a schematic diagram of pilot mapping in a delay-Doppler domain according to an embodiment of this application. FIG. 5 shows a manner to be used for pilot mapping in the delay-Doppler domain. In FIG. 5, a transmitted signal includes a single-point pilot located at $(l_p, k_p)$ (which is a small square labeled by 1), guard symbols (unshaded portions) with an area of $(2l_\tau + 1)(4k_v +1)-1$ and surrounding the single-point pilot, and a data portion of $MN -(2l_\tau +1)(4k_v +1)$ (a region outside the guard symbols). At the receiver end, two offset peaks (slashed shaded portions) appear in the guard band of the delay-Doppler domain grid points, implying that there are two secondary paths with different delay-Doppler in the channel in addition to a primary path. Through measurement on amplitude, delay, and Doppler parameters of all the secondary paths, a delay-Doppler-domain expression for the channel is obtained, that is, $h(v, \tau)$.

In particular, to prevent contamination of the pilot symbols by data on grid points of the received signal, which can lead to inaccurate channel estimation, the area of the guard symbols needs to satisfy the following condition:

$$l_\tau \geq \tau_{\max} M \Delta f, \quad k_v \geq v_{\max} N \Delta T \qquad (7)$$

where, $\tau_{\max}$ and $v_{max}$ are the maximum delay and the maximum Doppler shift of all paths of the channel, respectively.

The example in FIG. 5 corresponds to a single-port scenario, that is, there is only one set of reference signals to be transmitted. In modern multi-antenna systems, a plurality of antenna ports can be used to send a plurality of streams of data simultaneously, thereby fully utilizing spatial freedom of the antenna to achieve the purpose of obtaining spatial diversity gain or improving system throughput.

FIG. 6 is a schematic diagram of mapping of a multiport reference signal in a delay-Doppler domain according to an embodiment of this application. When a plurality of antenna ports are present, a plurality of pilots need to be mapped onto the delay-Doppler plane, thus leading to a pilot mapping manner shown in FIG. 6.

In FIG. 6, 24 antenna ports correspond to 24 pilot signals. Each of the pilot signals takes the form of the pattern in FIG. 5, that is, a center-point impulse signal plus guard symbols on both sides. The number of delay-Doppler domain REs (resource elements) occupied by a single pilot is $(2l_\tau + 1)(4k_v + 1)$. If there are P antenna ports, considering that guard bands of neighboring antenna ports can be multiplexed and assuming that the pilot is provided at $P_1$ in the delay dimension and $P_2$ in the Doppler dimension, satisfying $P = P_1P_2$, the total resource overheads of the pilot re $[P_1(l_\tau + 1) + l_\tau][P_2(2k_v + 1) + 2k_v]$

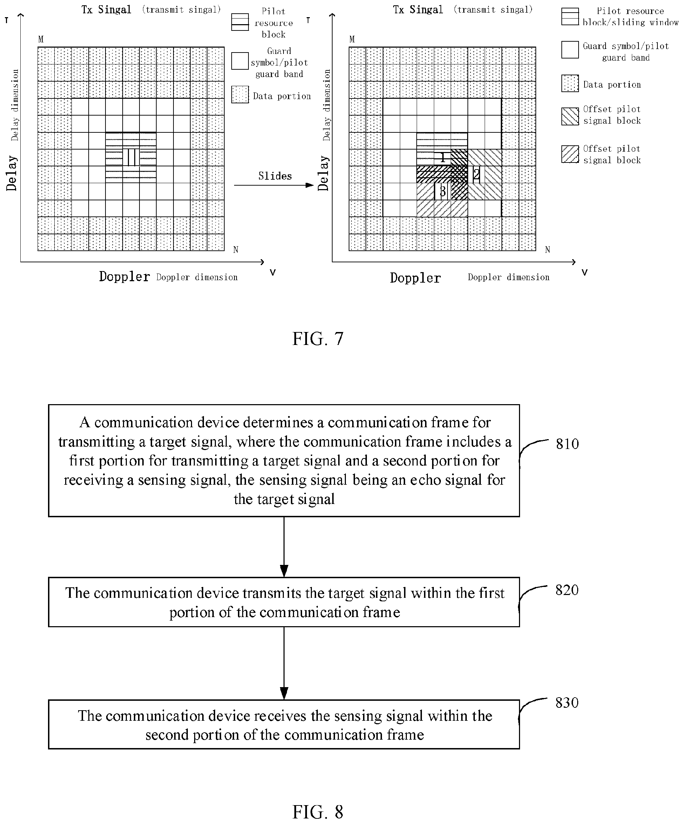

FIG. 7 is a schematic diagram of detection of a pilot sequence according to an embodiment of this application. As shown in FIG. 7, in addition to the single-point pulse pilot described above, the pilot in the delay-Doppler domain may alternatively be a pilot sequence that is constructed based on a pseudo noise (pseudo noise, PN) sequence generated in a particular manner and that is mapped onto a two-dimensional resource grid on the delay-Doppler plane according to a particular rule, that is, a shaded portion in the left figure of FIG. 7.

The shaded portion in the left figure of FIG. 7 (that is, resource positions occupied by the pilot sequence) may be referred to as a pilot resource block in the embodiments of this application. The unshaded region next to the pilot resource block is a pilot guard band, including blank resource elements on which no signal/data is transmitted. Selection of the width of the guard band is related to the maximum delay of a selected channel and the maximum Doppler. For pilot sequences of different ports, pilots with low correlation can be selected and superimposed to map onto a same block of resources, and then detection on the pilot sequences is performed at the receiver end by using a specific algorithm so as to distinguish the pilots corresponding to different antenna ports. Due to complete resource multiplexing at the transmitter end, pilot overheads under the multi-antenna port system can be greatly reduced.

The example in FIG. 7 presents a sequence-based pilot detection manner. At the receiver end, due to different delays and Doppler shifts of two paths of the channel, the received pilot signal block is shifted in the delay-Doppler as a whole to a square position in the slashed shaded portion of the figure (that is, a square labeled 2 and eight squares adjacent to the square, and a square labeled 3 and eight squares adjacent to the square). In this case, a sliding window detection operation is performed in the delay-Doppler domain at the receiver end using the known transmitted pilot (horizontal-line shaded portion in the figure, a square labeled 1 and eight squares adjacent to the square). When a known result $M(R,S)[\delta,\omega]$ of the sliding window detection operation is $N_P \to +\infty$, the following properties (a probability that the following equation holds true tends to be 1) are present:

$$M\left(R,S\right)[\delta,\omega] = 1 + \varepsilon'_{N_P}, \quad if(\delta,\omega) = (\delta_0,\omega_0)$$
$$= \varepsilon_{N_P}, \qquad if(\delta,\omega) \neq (\delta_0,\omega_0). \tag{8}$$

where, $|\varepsilon'_{N_P}| \leq \dfrac{1}{\sqrt{N_P}}$, $|\varepsilon_{N_P}| \leq \dfrac{C+1}{\sqrt{N_P}}$, and $C > 0$ is a constant and decreases with an increasing SINR of the signal. $(\delta,\omega)$ and $(\delta_0,\omega_0)$ in the equation are a current (center point) position of the sliding window and a position to which the pilot signal block (the center point) in the received signal is shifted, respectively. As can be seen from the equation, a value for a position near 1 can be obtained only when $(\delta,\omega) = (\delta_0,\omega_0)$; otherwise, the result of the sliding window detection operation is a smaller value. Therefore, when the sliding window (the horizontal-line shaded portion in the figure, that is, the square labeled 1 and the eight squares adjacent to the square) coincides exactly with an offset pilot signal block (the slashed shaded portion in the figure, that is, the square labeled 2 and the eight squares adjacent to the square as well as the square labeled 3 and the eight squares adjacent to the square), the detector obtains, through calculation, one energy peak to be presented at the $(\delta_0,\omega_0)$ position in the delay-Doppler domain, that is, positions of the small squares labeled 2 and 3 in the figure.

Therefore, provided that $N_P$ is guaranteed to be of sufficient length, the receiver can obtain a correct pilot position based on the values of $M(R,S)$, that is, obtains delay-Doppler information of the channel. Meanwhile, an amplitude value of the channel is given by the $1+ \varepsilon'_{NP}$ value obtained from the detection operation.

The general method for constructing a pilot (or reference signal) sequence in the delay-Doppler domain is as follows:

First, a base sequence is generated. The base sequence may be either a ZC sequence or a PN sequence. The PN sequence includes the following sequences: M sequence, Gold sequence, Kasami sequence, Barker sequence, and so on.

Then, the base sequence is modulated to generate a pilot sequence.

Optionally, an orthogonal cover code (Orthogonal cover code, OCC) can be used for the pilot sequence to further enhance the orthogonality.

2. ISAC technology

Through a protocol stack based on the ISAC technology, future communication devices integrate dual functions of communication and sensing, which allows for hardware sharing, frequency spectrum sharing, and protocol interoperability between communication and sensing signals, enabling the integrated design of communication and sensing functions. The core feature of future ISAC devices is realization of waveform multiplexing between communication and sensing signals. Through protocol-defined waveforms, information transfer and target detection are performed in protocol-specified spectrums. Further, through a shared protocol stack, channel and spatial information obtained by each of the communication system and the sensing system can be interoperable, thus implementing mutual assistance between communication and sensing and achieving further optimization of overall performance.

The function of the communication system is to transmit information, so the optimization objective of the communication system is to approximate the Shannon channel capacity as described in the information theory. The function of the sensing system is to detect a target, for example, a typical radar system, and the optimization objective of the system is an optimal lower bound of an estimated variance of a target parameter (distance, speed, Doppler, or the like), that is, a Cramer-Rao bound (Cramer-Rao Bound, CRB) of a fuzzy function. The difference in functional focus makes it difficult to optimize the performance of both communication and sensing in the design of ISAC systems, and a compromise between the two has to be made according to requirements.

In the integrated radar-communication design, waveform design is the focus, and the key of integrated waveform design is to minimize interference between communication signals and sensing signals, to meet requirements of the communication and sensing functions and to improve the spectral efficiency under the premise of guaranteeing the system performance. The integrated waveform may use a manner of multiplexing, including time division multiplexing, frequency division multiplexing, or space division multiplexing, or may use a manner of sharing, that is, a new fusion waveform is designed, where the design needs to consider whether the integrated waveform should be mainly for the communication function or the radar detection function so as to achieve performance balance. Common fusion waveforms are mainly divided into single-carrier waveforms and multicarrier waveforms. The single-carrier waveform design is usually combined with the spread spectrum technology, such as direct-sequence spread spectrum (Direct-Sequence Spread Spectrum, DSSS) or chirp spread spectrum (Chirp Spread Spectrum, CSS). The multicarrier integration waveforms are more typically orthogonal frequency division multiplexing (Orthogonal Frequency Division Multiplexing, OFDM) waveforms, which has some advantages over single-carrier spread spectrum integrated waveforms, such as higher spectral efficiency, flexible bandwidth resource allocation, or no range-Doppler coupling effect, and is easier to integrate with the communication system, such as a 5G communication system.

3. OTFS radar technology

Conventional multicarrier integration waveforms are mainly based on OFDM waveforms, with advantages mainly in simple random signal generation, all-digital processing, and very high time-frequency processing gains. However, because high accuracy of the OFDM radar relies on joint detection of multiple OFDM symbols, and the cyclic prefix (Cyclic prefix, CP) of OFDM symbols does not participate in measurement, causing a specific amount of overheads. In addition, OFDM waveforms are less adaptable to high Doppler scenarios, and can only detect Doppler shifts of a maximum of 10% subcarrier spacings, which is limited in the application scenarios.

The OTFS waveform as a sensing waveform overcomes the two shortcomings of the aforementioned OFDM waveform. Firstly, for an $MN$ resource grid of a same size, it is assumed that $M$ corresponds to the number of subcarriers and $N$ corresponds to the number of symbols. OTFS signals only require one cyclic prefix (CP) to be added in front of $N$ symbols to avoid inter-symbol interference; whereas conventional OFDM signals requires one CP to be added in front of each symbol to avoid inter-symbol interference, requiring a total of $N$ CPs. Therefore, overheads for the OTFS are significantly reduced, which means that it has more energy for sensing the signals, thus improving target detection and tracking capabilities. Secondly, natural tolerance of OTFS signals to high Doppler makes OTFS radars good at detecting larger Doppler shifts in high-speed scenarios and perform significantly better than OFDM radars.

Meanwhile, hardware with communication and sensing capabilities is still designed to be independent of each other in terms of communication and sensing. There is no good integration in terms of hardware, spectrum, and protocol stack. In addition, there is no systematic research on the sensing fusion technology of the communication system based on delay-Doppler transform domain, especially lack of specific protocol stack design.

4. Design of ISAC signals

At present, in the research of ISAC, the integration of radar and communication waveforms has been initially implemented. For example, the OFDM radar has shown a good performance tradition in low Doppler scenarios. In radar design, OTFS signals are typically generated based on a random set of symbols in the delay-Doppler domain (delay-Doppler). Each symbol in the random symbol set has equal transmit power, and the use of a random symbol set avoids identification and listening, and also does not impede detection of echoes, as being already known to the transmitter end.

In the communication system, both data and pilot/reference signals are intended to convey definite information, so random symbol sets are not sent. Also, in the communication system, the pilot is mainly used to obtain information such as channel state information (Channel state information, CSI), which usually requires a higher received signal to interference plus noise ratio (Signal to Interference plus Noise Ratio, SINR) to ensure reliability of measurement. Therefore, in the communication system, the transmit power of each symbol in the same frame may not be the same. It can be learned that there are the following main differences in the design of radar sensing signals and communication pilot signals:

(a) For radar sensing signals, as many sample points as possible need to be sent to enhance cumulative energy of echo signals and ensure accuracy of detection. For communication pilot signals, as few sample points as possible need to be sent under the premise of guaranteeing accuracy of CSI estimation to reduce resource overheads.

(b) Transmitting and receiving devices for radar sensing signals are usually the same, and there is no special requirement for design of sending symbol sets. Transmitting and receiving devices for communication pilot signals are different, and sending symbol sets usually needs to undergo a special design to ensure detection performance of the pilots.

(c) In a case of considering only a LoS path, a propagation distance from TX to RX of the radar sensing signal is doubled compared with that of the communication pilot signal, and therefore there is a difference in the coverage requirement between the two.

Due to the design differences, it is difficult to achieve functional unification between the radar sensing signals and the pilots in the communication system.

5. Channel prediction based on network topology

A model usually used for describing a channel is a time-domain delay-tap (delay-tap) channel model, which essentially describes in mathematical terms the physical process by which a transmitted signal, after being reflected by different reflectors (reflector) in the environment, arrives at the receiving device via different paths. At a given moment or the so-called delay tap, a received signal is in essence a delayed superposed signal (at the given moment) on the receiver side that is obtained after a transmitted signal is reflected by a reflector and passes through a number of physical propagation paths. The mathematical expression describing such superposition effect is a multipath (multi-path) channel model. The discretized time-domain tapped delay channel model intuitively describes the principle of signal superposition:

$$h(\tau, \ v) = \sum_{p=0}^{P-1} h_p \delta(\tau - \tau_p) \delta(v - v_p)$$

In the above equation, $p$ denotes the number of paths, $h_p$ denotes complex gain of the p-th path, $\tau_p$ denotes a delay of the p-th path, and $v_p$ denotes a Doppler shift of the p-th path. Therefore, when the several key parameters of the channel are known, it is possible to reconstruct a time-domain channel matrix and then use the time-domain channel matrix for symbol detection on received signals.

As described in the background, the delay and Doppler shift of the channel can be viewed as projections in the signal domain of the geometric position relationship (coordinate positions) between communication nodes in the physical world and a motion trend (motion direction angle or relative velocity). For example, in a Cartesian coordinates system (Cartesian coordinates), there is a network with two signal propagation paths, where coordinates of the transmitting and receiving nodes $N_1$ and $N_2$ are $(x_1, y_1)$ and $(x_2, y_2)$, respectively. A non line of sight (Non Line of Sight, NLoS) path is determined based on a reflection node $N_3$ located in $(x_3, y_3)$. Therefore, a propagation time difference between the two signal propagation paths, that is, a multipath delay $\tau$, can be calculated as follows:

$$\Delta t = \frac{\sqrt{(x_1 - x_3)^2 + (y_1 - y_3)^2} + \sqrt{(x_3 - x_2)^2 + (y_3 - y_2)^2} - \sqrt{(x_1 - x_2)^2 + (y_1 - y_2)^2}}{c}.$$

For another example, it is assumed that the velocity of $N_i$ is denoted by $(v_i, \gamma_i)$, where $v_i$ is a scalar value of the velocity of motion, and $\gamma_i$ is an included angle of the motion direction with respect to the axis of the Cartesian coordinate system. In this case, the relative velocity scalar of $N_1$ and $N_2$ can be calculated as:

$$v_{LoS} = \sqrt{(v_1 \cos \gamma_1 - v_2 \cos \gamma_2)^2 + (v_1 \sin \gamma_1 - v_2 \sin \gamma_2)^2}.$$

The included angle of the relative velocities of the two with respect to the X axi is as follows:

$$\gamma_{Los} = \begin{cases} \gamma_1 - \gamma_2 + 2\pi, & \gamma_1 - \gamma_2 < 0 \\ \gamma_1 - \gamma_2, & \gamma_1 - \gamma_2 \geq 0 \end{cases}$$

Similarly, signals arriving at the receiver via different paths can be calculated based on coordinates of $N_1$, $N_2$, and $N_3$. Using the line of sight (line of sight, LoS) path as an example, it is assumed that included angles of the antenna panels of $N_1$ and $N_2$ with respect to the X axi are $\beta_1$ and $\beta_2$, it is easy to know based on the geometrical relationship that the angle of incidence (included angle with respect to the antenna panel normal) of the direct signal from $N_1$ to $N_2$ is:

$$\theta_{Los} = \arctan\left(\frac{|y_1 - y_2|}{|x_1 - x_2|}\right) + \beta_2 - \frac{\pi}{2}$$

Similarly, for the NLoS path, it is necessary to consider only the last reflection node $N_3$, that is:

$$\theta_{NLos} = \arctan\left(\frac{|y_3 - y_2|}{|x_3 - x_2|}\right) + \beta_2 - \frac{\pi}{2}$$

According to the calculation formula of Doppler shift, Dopplers of the two paths are separately obtained as follows:

$$\Delta f_{Los} = \frac{\sqrt{(v_1 \cos\gamma_1 - v_2 \cos\gamma_2)^2 + (v_1 \sin\gamma_1 - v_2 \sin\gamma_2)^2.}}{f_c} \cos\left(\arctan\left(\frac{|y_1 - y_2|}{|x_1 - x_2|}\right) + \beta_2 - \frac{\pi}{2}\right),$$

$$\Delta f_{NLos} = \frac{\sqrt{(v_1 \cos\gamma_1 - v_2 \cos\gamma_2)^2 + (v_1 \sin\gamma_1 - v_2 \sin\gamma_2)^2.}}{f_c} \cos\left(\arctan\left(\frac{|y_3 - y_2|}{|x_3 - x_2|}\right) + \beta_2 - \frac{\pi}{2}\right),$$

It should be noted that this method of channel construction based on network topology or node position relationship is not applicable to the conventional channel measurement and estimation theory. This is due to the fact that in conventional communication systems, precise geometrical position information and motion trend information of network nodes almost cannot be obtained, and thus required CSI can only be obtained by using a classical channel estimation method for pilot or reference signals.

Future ISAC devices provide possibilities for the aforementioned network topology-based channel prediction. First, the ISAC device may use its own sensing module to obtain: i) a network topology (node geometrical positional relationships) at a current moment, and ii) motion trends of network nodes at the current moment. Secondly, assuming that information of ii) will not change in a short period of time, the ISAC device can update (predict), based on the information of i) and ii), a network topology for a next moment. Further, based on a predicted network topology for a future moment, the ISAC can then use new geometrical positional relationships between nodes to calculate key parameters of the CSI for the future moment, so as to estimate channel response information for the future moment in accordance with a specific channel model.

The following describes in detail a transmission method and apparatus provided in the embodiments of this application by using some embodiments and application scenarios thereof with reference to the accompanying drawings.

FIG. 8 is a schematic flowchart of a transmission method according to an embodiment of this application. As shown in FIG. 8, the method includes the following steps.

Step 810: A communication device determines a communication frame for transmitting a target signal, where the communication frame includes a first portion for transmitting a target signal and a second portion for receiving a sensing signal, the sensing signal is an echo signal for the target signal.

Step 820: The communication device transmits the target signal within the first portion of the communication frame.

Step 830: The communication device receives the sensing signal within the second portion of the communication frame.

Most of current system designs for ISAC still tend to allow radar sensing signals and communication reference signals to work independently of each other, while using a common protocol stack to implement exchange and sharing of measurement information between the radar and communication systems, so as to achieve mutual assistance between radar and communication.

On this basis, the embodiments of this application can further implement multiplexing of the radar and communication systems in terms of signals, which can further reduce overheads and implement seamless integration of the two.

To achieve multiplexing of sensing and communication signals, on the basis of waveform multiplexing, the following design and optimization need to be considered:

(a) Design of sensing and communication signals based on known sequences. A sensing pilot signal is generated by using a long sequence with superior detection performance. The transmitter side obtains sensing information through echo detection; and the receiver side obtains channel information through reference signal measurement.

(b) Joint performance-overhead optimization of sensing and communication signals. For example, accuracy of sensing is optimized based on the minimum measurement accuracy requirement for communication; or throughput or the like of the communication system is optimized based on a performance lower bound of sensing. Selection of objective equations and constraints for such optimizations is closely related to actual service requirements (including sending distance and accuracy requirement, signal power constraint, communication delay requirement, pilot overhead constraint, single unit/network spectral efficiency metrics, or the like) and channel models for different scenarios.
(c) Fusion algorithms for sensing and communication measurement estimators. For example, based on a set of sensing pilot signals, at least the following three types of information can be obtained using known signal measurement techniques:

(1) sensing bidirectional propagation channel CSI obtained through echo measurement on the transmitter side;
(2) channel CSI predicted by the transmitter side by sensing estimated node set position information and motion trend information; and
(3) downlink channel CSI obtained by the receiver side through measurement on sensing pilot signals.

The communication and sensing signals in the ISAC system can collaborate in specific scenarios to achieve a win-win situation of mutual assistance between sensing and communication. The embodiments of this application may propose a novel frame structure for communication and sensing fusion, in which sensing signals are embedded into a frame structure of communication data according to specific rules, uniformly modulated and processed by a baseband, and then sent out through the transmitter side ISAC TX (I-TX) of the communication device, thereby implementing fusion of the baseband and the radio frequency on the transmitter side.

On the RX side (including communication RX, namely C-RX, and sensing RX, namely S-RX), a same signal needs to be processed differently for different requirements of sensing and communication.

A full-duplex ISAC system relies on a set of exclusive RX antenna arrays for receiving sensing signals, hereafter referred to as S-RX. Its biggest advantage lies in that the S-RX can continuously perform detection on echoes uninterruptedly and perform measurement of delay, Doppler, and other information, without having to consider uncertainty of echo arrival time faced during design of a TX frame structure. However, because the I-TX and S-RX operate independently and simultaneously, to avoid mutual interference, their spatial separation is required to be extremely high, which is difficult to implement on miniaturized devices and is prone to more severe self-interference problems. In addition, the sensing-specific R-RX system requires an additional set of baseband and radio frequency units for sensing, which increases hardware costs. Also continuous operation of the sensing system generates additional energy overheads.

To overcome the above disadvantages faced by the full-duplex ISAC system, for miniaturized devices, it may need to consider complete integration of ISAC hardware, allowing for shared use of C-TX/RX and S-RX. In this case, the sensing and communication functions of the ISAC need to be implemented in a TDD manner, which is therefore referred to as half-duplex ISAC. A frame structure of communication-sensing union becomes one of key designs to optimize its performance.

In the ISAC system, assuming that a communication target node and a sensed target node are the same, a bidirectional propagation delay of sensing signals can be roughly considered to be two times of a propagation delay of the communication signal. In a case that the sensing channel has a LoS path, a bidirectional propagation delay for a 1-km distant object is about 6.67 $\mu$ s, which is much smaller than a slot size of 0.125~1ms as usually defined.

As a result, the ISAC system typically expects to receive echoes within a very short period of time after sensing signals are sent. In other words, if all sample points of the sensing signal need to be used for detection, the ISAC system needs to finish sending all sample points of a sensing frame before receiving echoes, so as to switch an antenna radio frequency from TX to RX in a timely manner.

For example, assuming that a bidirectional propagation delay is approximately 6.67 $\mu$ s and the number of sample points sent is 1024, a required sampling interval is 0.0651ns, which means that a system sampling rate is 153.6MHz. If the number of sample points sent is 512, the sampling rate is required to be 76.8MHz. If the number of sample points sent is 256, the sampling rate is required to be 38.4MHz. All can be implemented in the communication system.

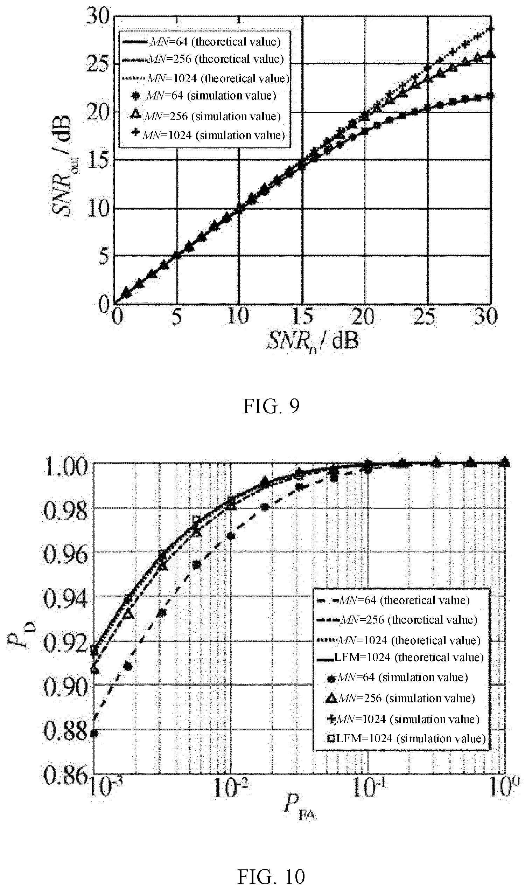

In addition, sensing performance of QAM-OFDM/OTFS signal sample points based on the multicarrier communication system is strongly influenced by dimensions $MN$ (also known as a time-width product) of the OFDM/OTFS grid. FIG. 9 is a schematic diagram of an impact of MN on received SNR of a sensing signal according to an embodiment of this application. FIG. 10 is a schematic diagram of an impact of MN on target detection performance according to an embodiment of this application. As shown in FIGs. 9 and 10, the QAM-OFDM/OTFS sensing algorithms can provide acceptable performance only when $MN > 64$, still with low accuracy. When $MN > 256$, the QAM-OFDM/OTFS sensing algorithm achieves performance close to that of conventional radar-specific linear frequency modulation (LFM, linear frequency modulation) signals.

Optionally, the communication device may be a terminal; and its communication peer end may be a network-side device or another terminal.

Optionally, the communication device may be a network-side device, such as a base station; and its communication peer end may be a terminal.

Optionally, the communication device may alternatively be referred to as an ISAC device.

In the embodiments of this application, the communication device is a transmitter side, and the target signals transmitted may be as a communication signal and a sensing signal. The transmitter side of the communication signal and the sensing signal may use a unified frame structure and share a common set of basebands. The receiver side of communication and sensing may process received signals separately. The receiver side of the communication signal may be a network node of the communication peer end. The receiver side of the sensing signal, that is, the communication device, performs measurement on the echo signal (echo obtained after the target signal is reflected by a target object).

Optionally, the target signal when being used for communication, that is, being used as a communication signal, may be a data signal and/or a pilot signal, or may be other signals that enable communication, which is not limited in the embodiments of this application.

For example, the communication signal may be a pilot signal, and the communication peer end may be a network node at the communication peer end. The network node may perform channel estimation and symbol detection on received signals to obtain information.

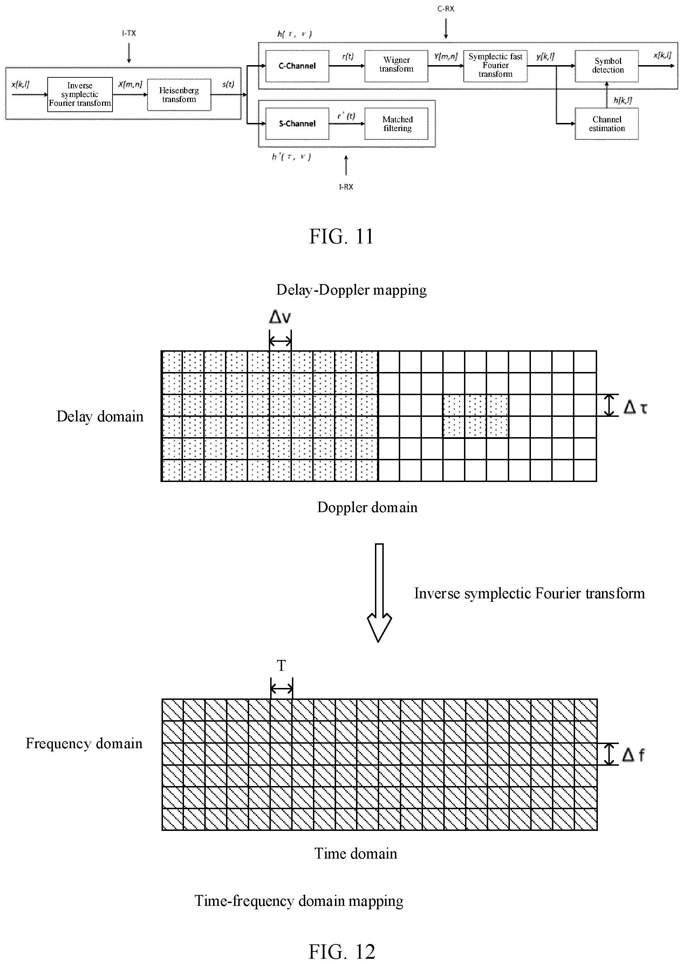

FIG. 11 is a flowchart of ISAC signal processing based on OTFS modulation. FIG. 11 shows a transmission and reception processing procedure for communication and sensing signals based on OTFS.

A target signal in the solution of the embodiments of this application is used as a sensing signal, and instead of using a random dataset, sensing detection may be performed on the sensing signal directly using time-domain sample points of a communication signal transmitted. A mapping and detection manner of pilot and data includes, but is not limited to, a manner shown in FIGs. 5 and 7.

Optionally, the communication device may first determine a communication frame for transmitting the target signal, and then transmits the target signal in a first portion of the communication frame. After receiving the target signal, the communication peer end may complete a communication process based on the target signal, for example, performing a communication process such as channel estimation. The communication device may also receive an echo signal obtained after the target signal is reflected from the target object, to implement sensing of the target object.

On the sensing receiver side (I-RX) of the communication device, sensing and detection may be performed based on all sample points within the current communication frame to improve signal detection performance as much as possible. Symbols being transformed from the delay-Doppler domain to the TF domain through ISFFT occupy all RE resources within one time unit (for example, one frame). Time-domain signals generated by the symbol sample points on the resource grids can all be used for detection of sensing signals.

FIG. 12 is a schematic diagram of symbol mapping according to an embodiment of this application. As shown in FIG. 12, this embodiment of this application may use existing OTFS data frames as ISAC signals. Using an example in which the target signal serving as a communication signal is a pilot signal, when the target signal arrives at the C-RX, it can be processed in a manner on the upper half of the receiver side of FIG. 11, channel estimation is performed in the delay-Doppler domain using the pilot signal contained therein, and symbol detection is then performed. When an echo signal for the target signal arrives at the I-RX, it can be processed in a manner on the lower half of the receiver side of FIG. 11, sensing and measurement is performed using all time-domain sample points of the echo signal. In this way, the ISAC target signal in the embodiments of this application can actually be considered to be all time-domain sample points in FIG. 12 or a subset of the time-domain sample points.

In the embodiments of this application, for technical characteristics of half-duplex ISAC devices, a frame structure using communication signals for sensing is provided, which implements sensing of the target object while completing the conventional communication function. This achieves the effects of reducing overheads of sensing signals while taking into account the communication performance.

In the embodiments of this application, an ISAC system based on multicarrier communication signals is designed, which is particularly applicable to the OTFS system. Communication and sensing share protocol stack, radio frequency, and frequency spectrum and operate in a half-duplex mode. The target signal sent by the transmitter side is used for target detection and environment sensing by the sensing system, and is used as a signal of completing communication by the communication system, for example, downlink channel measurement reference signal. Through multiplexing of the frame structure and the pilot, a compact ISAC frame structure is implemented, which reduces communication overheads.

In this embodiment of this application, the target signal transmitted for communication is considered as both a communication signal and sensing information, and a new communication frame structure is defined for transmission of the target signal, so as to implement that communication and sensing share a protocol stack, radio frequency, and frequency spectrum and operate in a half-duplex mode, avoiding interference between the communication signal and the sensing signal. This also implements a compact ISAC frame structure, reducing communication overheads and resources.

Optionally, in the embodiments of this application, when an ISAC signal is sent, the I-TX and the communication device need to be immediately converted to the I-RX for echo listening. In this case, to avoid interference of the communication signal, a second portion can be reserved as a gap (Gap) for listening to the echo signal.

Therefore, this measurement gap can be determined when a communication frame for transmitting the target signal is determined.

Optionally, the second portion is located after the first portion and a sum of lengths of the first portion and the second portion is a fixed value.

Optionally, a length of a time unit formed by the first portion and the second portion may be a fixed value, for example, being fixed to 14 symbols or fixed to 24 symbols, which is not limited in the embodiments of this application. The time unit may be one fixed time unit, for example, being one subframe, which is not limited in the embodiments of this application.

Optionally, the fixed time unit may be referred to as an ISAC signal subframe, an ISAC frame, or an ISAC subframe.

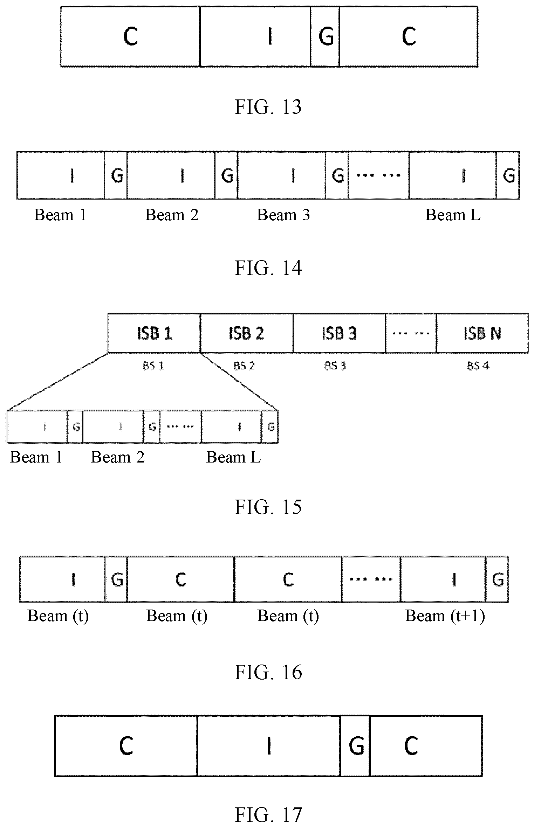

Optionally, FIG. 13 is a first schematic diagram of a position of a second portion according to an embodiment of this application. As shown in FIG. 13, the position of the second portion may be located within a subframe of the target signal, that is, the ISAC signal. In other words, the first portion and the second portion are both located in one fixed time unit, and the second portion is used for near-field sensing.

Optionally, C in the figure may be considered as one fixed time unit.

For example, if one fixed time unit has a length of 14 symbols, it can be determined that the first 10 symbols are the first portion and the last 4 symbols are the second portion, that is, a length corresponding to the gap. It should be noted that one fixed time unit, the length of the first portion, and the length of the second portion are all examples, which are not considered as a limitation in the embodiments of this application.

In the embodiments of this application, no other communication frame structures may be introduced without additional indication.

In the embodiment of this application, the second portion occupies part of a time-domain resource of the ISAC frame, and the number of sample points for ISAC signal detection is limited by the length of the second portion.

Optionally, the length of the second portion is a length of a minimum sensing distance.

Optionally, the length of the second portion actually determines the number of sample points for the sensing signal received, which determines sensing performance: accuracy and sensing range. Sensing signal detection based on multicarrier communication signals (for example, OFDM and OTFS) is essentially matched filtering performed on known echo signals. Therefore, theoretically it is possible to intercept only one section of the known echo signals and perform detection on the section, sacrificing performance for less resource consumption. This can be applied to the OTFS system, for example, because the system design of OTFS requires a larger resource per frame, so even if only part of the sample points are taken for sensing and measurement, it is still sufficient to meet accuracy of sensing.

Using FIG. 13 as an example, a length of the fixed time unit ISAC subframe is $T_f$, where the time length of the first portion I is , and a time length of the second portion G for echo reception is $T_g$. Assuming that $t_{2d}$ represents a bidirectional propagation delay of the sensing signal returning to the I-RX after being reflected by the sensed target object, $T_s$ is a sample-point time length.

$$T_f = T_i + T_g.$$

Due to different distances of sensed target objects, $t_{2d}$ is different. In a case that $T_f$ is determined, the following possible cases are present.

Case 1. $T_i \geq t_{2d}$.

Part of the echo signal has been returned before the target signal has been transmitted completely. Because the half-duplex antenna is still transmitting the target signal and has not switched from I-TX to I-RX, a portion of sample points transmitted earlier of the target signal with a time length of $T_i - t_{2d}$ cannot be received to participate in the sensing detection, and the maximum number of sample points of the target signal that can be received is $T_i - (T_i - t_{2d}) = t_{2d}$.

When the communication device has completed initial measurement, for geometric position information (which may be a first position) of the sensed target object, there is already a-priori information for $t_{2d}$. For example, in the scenario of the embodiments of this application, the ISAC device can set appropriate $T_g$ and $T_i$ based on $t_{2d}$ of the known sensed target in the process of updating the network topology.

Case 2. $T_i < t_{2d}$

After the ISAC signal has been transmitted completely, echos can be only received after a waiting time of $t_{2d}$ - $T_i$ elapses. The condition for receiving the echos completely is $T_g$ - $(t_{2d} - T_i) \geq T_i$, that is, $T_g \geq t_{2d}$; based on the principle of minimizing overheads, only $T_g = t_{2d}$ is required. In this case, there is still a time of $T_f$ - $T_g$ = $T_f$ - $t_{2d}$ in the fixed time unit to send the communication signal, and therefore case 2 can fully fall back to case 1 to maximize communication throughput.

In this way, a better trade-off between communication performance and sensing performance can be implemented by flexibly adjusting the length of the second portion o adapt to the needs of different scenarios.

In the embodiments of this application, when $$T_i = T_g = \frac{1}{2}T_f$$ , the I-RX may use all sample points of the target signal for sensing and measurement, and when $$T_i > \frac{1}{2}T_f > T_g$$ , the I-RX may use some sample points of the target signal for sensing and measurement.

Optionally, since both the pilot and data for communication and the second portion gap are present within the communication frame, the receiver side needs to know the position information of the communication frame and the length of the second portion, so as to implement demodulation by using the portion of sample points of the communication frame that contains the communication data (while discarding the sample points of the second portion gap).

Optionally, to maximize the sensing performance, the length of the second portion may be large enough to receive all the echo sample points. However, considering the overhead aspect, it is desirable to have the second portion as small as possible. Therefore, the optimal choice can be: the length of the second portion $T_g = t_{2d}$.

Therefore, $T_g = t_{2d}$ can be selected, and $T_i = T_f$ - $t_{2d}$.

Optionally, during initial measurement in actual scenarios, because an exact position of the sensed target is not known, $t_{2d}$ cannot be determined.

Therefore, initial resource allocation can be determined based on $t_{dmin}$ corresponding to the minimum sensing distance designed for the system, that is, $T_g = t_{dmin}$, where $T_i = T_f$ - $t_{dmin}$.

Optionally, beams used for a plurality of consecutive communication frames are not all the same or are all different.

Optionally, the plurality of consecutive communication frames may be used for detection of a first position of the target object.

Optionally, during determining of the communication frame for transmitting the target signal, in a case that the sum of the lengths of the first and second portions is a fixed value, it can be combined with a beamforming scheme. In this case, it is assumed that a propagation path of a Tx beamformed signal and that of a reflected signal are the same, but in opposite directions.

Optionally, beam initialization may be performed first; in the beam initialization phase, since there is no positional information of the sensed target object, the communication device needs to search for the target by means of beam scanning over a large range, so that a plurality of adjacent communication frames may be used to first perform sensing based on beam scanning.

In general, when a beam resolution is appropriate, detection of an echo in the x-th communication frame in which beam x is located can indicate presence of the target object (which can be referred to as a sensed target or sensed target object) in the direction corresponding to this beam.

FIG. 14 is a schematic diagram of a frame forming form in a beam initialization phase according to an embodiment of this application. As shown in FIG. 14, a plurality of communication frames are sent in sequence, implementing a frame forming form similar to I-subframe-burst (ISB). A beam used for each communication frame in one ISB may be different, so as to achieve the purpose of traversing all desired measurement directions in one or more ISBs.

FIG. 15 is a schematic diagram of an ISB and an ISB set according to an embodiment of this application. As shown in FIG. 15, several I-subframe-bursts are combined to further form a ISB set, where a beam set for a specific ISB in one ISB set can cover one sectoral range, and the entire ISB set covers a 360-degree spherical range.

In the embodiments of this application, with the ISAC subframe burst set, when a local matched filtering peak that is the maximum or exceeds a preset threshold has been found through searching at a specific ISB, it can be considered that the sensed target is located in a current ISB without requiring detection of other ISBs.

Optionally, the method further includes:
transmitting target signals in the plurality of consecutive communication frames based on a same directional beam after a first position of the target object is determined, and updating the directional beam after it is determined that the target object has changed from the first position to a second position.

Optionally, after the first position of the target object is determined based on the target signal in the one or more consecutive communication frames, because position information of the sensed target object is already present, the communication device may use a directional beam for further tracking the target object and correct the directional beam at intervals based on motion trend information of the target object obtained through sensing and measurement.

FIG. 16 is a schematic diagram of a frame forming form after beam determining according to an embodiment of this application. As shown in FIG. 16, a beam used in the t-th communication frame is Beam(t), and assuming that the object does not have a large change in displacement within a short period of time and is still within a coverage range of Beam(t), Beam(t) may be still used for subsequent several communication frames. By the time of the (t+1)-th communication frame, when it is determined, based on previous communication frames, that the target object has departed from the first position, the directional beam is then adjusted in the (t+1)-th communication frame to beam (t+1) based on messages obtained through measurement and prediction.

Optionally, C in the figure may be considered as one fixed time unit.

Optionally, the second portion is located after the first portion and a length of the first portion is a fixed value.

Optionally, the first portion may belong to one fixed time unit and the second portion is after the fixed time unit, that is, $T_i = T_f$.

Optionally, the length of the first portion may be a fixed value, for example, being fixed to 14 symbols or 24 symbols, which is not limited in the embodiments of this application. The time unit may be one fixed time unit, for example, being one subframe, which is not limited in the embodiments of this application.

Optionally, the fixed time unit may be referred to as an ISAC signal subframe, an ISAC frame, or an ISAC subframe.

Optionally, FIG. 17 is a second schematic diagram of a position of a second portion according to an embodiment of this application. As shown in FIG. 17, the position of the second portion may be located in a subframe behind the target signal, namely the ISAC signal subframe, and is used for far-field sensing.

Optionally, C in the figure may be considered as one fixed time unit.

Optionally, in the embodiments of this application, sample points of the target signal may use all time-domain resources in the frame to maximize sensing performance.

Optionally, in the embodiments of this application, the communication frame behind the target signal needs to be designed additionally and a frame format may need to be indicated.

Optionally, a length of the second portion is a length of a maximum sensing distance.

Optionally, in the embodiments of this application, the length of the first portion for transmitting the target signal is $T_i = T_f$. In addition, at the usual sensing distance, $T_f \gg t_{2d}$, and therefore a maximum number of sample points that can be received is $t_{2d}$.

For example, when the length of the second portion for receiving echo signals is $T_g = t_{2d}$, sensing performance

$$N = \frac{t_{2d}}{T_s}$$

is maximized. In this case, sensing detection can be performed using $\quad$ sample points. $T_f$ is the length of the fixed time unit, and $T_s$ is the sample point time length.

During initial measurement in actual scenarios, because an exact position of the sensed object is not known, $t_{2d}$ cannot be determined. Therefore, initial resource allocation can be determined based on $t_{dmax}$ corresponding to the maximum sensing distance designed for the system, that is, $T_g = t_{dmax,}$ where $T_i = T_f$.

When the communication device has completed initial measurement, for geometric position information of the sensed target, namely the first position, there is already a-priori information for $t_{2d}$. For example, in the embodiments of this application, the communication device can set appropriate $T_g$ and $T_i$ based on $t_{2d}$ of the known sensed target in the process of updating the network topology.

In this way, considering the feature that the marginal effect decreases with improvement of sensing performance and increase of the number of sample points, a better trade-off between communication performance and sensing performance can be implemented by flexibly adjusting the length of the second portion o adapt to the needs of different scenarios.

In the embodiments of this application, because $T_f \gg t_{2d}$, when $T_i = T_f$, the I-RX can always use only part of the sample points of the target signal for sensing and measurement.

Optionally, the method further includes at least one of the following:

indicating, by the communication device, a position of the communication frame to the communication peer end; and
indicating, by the communication device, the length of the second portion to the communication peer end.

Optionally, regardless of whether the sum of the lengths of the first portion and the second portion is a fixed value or the length of the first portion is a fixed value, due to the presence of both the pilot and/or data for communication and the second portion gap, the receiver side, that is, the communication peer end, needs to know the position information of the communication frame and the length of the second portion, so as to perform demodulation by using sample points of the portion containing the communication data in the communication frame (while discarding the sample points of the second portion gap).

Optionally, the indicating a position of the communication frame to the communication peer end includes at least one of the following:

indicating, based on a first period, a start position of the communication frame;
indicating, based on a first signal, the position of the communication frame;
updating, based on the first signal, the position of the communication frame; and
indicating, based on a first index, the position of the communication frame, where the first index corresponds to the position of the communication frame in a position index table, the position index table includes at least one second index, different indexes correspond to different positions, and the first index is one of the at least one second index.

Optionally, the indicating a position of the communication frame to the communication peer end includes at least one of the following:

indicating, based on a first period, a start position of a fixed time unit;
indicating, based on a first signal, a position of the fixed time unit;
updating, based on the first signal, the position of the fixed time unit; and
indicating, based on a first index, the position of the fixed time unit, where the first index corresponds to the position of the fixed time unit in a position index table, the position index table includes at least one second index, different indexes correspond to different positions, and the first index is one of the at least one second index.

Optionally, with such an indication scheme, indication may be further made to the communication peer end that the sum of the lengths of the first portion and the second portion is a fixed value, or indication may be further made to the communication peer end that the length of the first portion is a fixed value.
Optionally, there may be the following indication schemes for the position of the communication frame:

(1) Periodic indication

That is, the start position of the fixed time unit may be indicated based on the first period.
In other words, the start position of the communication frame or the fixed time unit may be indicated based on the first period.
Optionally, the first period may be preset or specified by the protocol or be a fixed value.
(2) Aperiodic indication

a. The position of the communication frame or the fixed time unit may be indicated based on the first signal, for example, the position of the communication frame or the fixed time unit is indicated/updated using physical resource control (Radio resource control, RRC), for example, using a bitmap to implement complete indication of the communication frame or the fixed time unit.
b. Semi-persistent indication, that is, the position of the communication frame or fixed time unit is updated based on the first signal when the position of the communication frame or the fixed time unit changes.
c. The position of the communication frame or fixed time unit is indicated based on the first index, where the first index corresponds to the position of the communication frame or fixed time unit in a position index table, the position index table includes at least one second index, different indexes correspond to different positions, and the first index is one of the at least one second index.

In other words, a position index table can be configured for a set of communication frames, and an indication signal is triggered to indicate the first index corresponding to the communication frame.
The positions in the position index table may be in a bitmap form, or be possible start and/or end positions of the communication frames.
Optionally, the indicating the length of the second portion to the communication peer end includes at least one of the following:

directly indicating the length of the second portion;
indicating, based on a third index, the length of the second portion, where the third index corresponds to the length of the second portion in a time-length index table, the time-length index table includes at least one fourth index, different fourth indexes correspond to different lengths, and the third index is one of the at least one fourth index; and directly indicating the number of sample points of a data portion of the target signal.

Optionally, for indicating the length of the second portion, there may be the following indication schemes:

(1) Directly indicating the time length of the second portion, for example, indicating a specific time length of gap.
(2) Indicating, based on the third index, the length of the second portion, where the third index corresponds to the length of the second portion in a time-length index table, the time-length index table includes at least one fourth index, different fourth indexes correspond to different lengths, and the third index is one of the at least one fourth index; where, for example, a time-length index table of a set of second portions may be broadcast first. A third index value corresponding to the length of the second portion contained in the communication frame is indicated in a control channel.
(3) Directly indicating the number of sample points of a data portion of the target signal.

Optionally, the communication frame may alternatively be considered as time-domain sample points contained in one mini slot, the length of the mini slot is fixedly configured to be 7 symbols, and an indication manner may also be included in downlink control information (Downlink control information, DCI) for indication.

Optionally, the determining a communication frame for transmitting a target signal further includes:

determining a minimum sensing distance of the communication device; and
based on the minimum sensing distance, adjusting a transmission time of the target signal so that the length of the first portion is less than or equal to the minimum sensing distance.

Optionally, detection of the sensing signal in the embodiments of this application may be performed by using a matched filtering method.

If $T_i > t_{2d}$, the I-RX can only use part of the ISAC signal for detection; and due to uncertainty of $t_{2d}$, it is difficult for the I-RX to determine a specific interception position of a local detection signal, and it can only use the enumerated form for hypothesis test (hypothesis test), which greatly increases the detection complexity.

Therefore, a minimum sensing distance $t_{min}$ can be determined based on a lower bound of the distance to the sensed target object, so as to adjust a transmission time of the target signal in the communication frame to always satisfy $T_i \le t_{min}$, which can preferentially avoid the complexity problem of requiring to intercept part of the target signal for detection.

Optionally, the method further includes:

determining at least one subsequence of the echo signal, where the subsequence includes at least two consecutive data sample points in the echo signal; and
performing detection on a target subsequence in the at least one subsequence.

Optionally, in the case of $T_i > t_{2d}$, it may be considered to reduce complexity by using at least one subsequence of the echo signal as a local detection signal for matched filtering.

Optionally, the so-called subsequence may refer to a subset of sample points of the echo signal for sample points of the target signal. The sample points of the target signal are all time-domain sample points sent within $T_i$, that is, a subset including part of the sample points of the target signal is used for radar sensing.

Optionally, the sample points of the echo signal are sample points received after the sample points of the target signal are reflected. For ease of description, the sample points of the echo signal may be represented in the same way as the sample points of the target signal in the embodiments of this application.

Optionally, the sample points of the target signal is assumed to be $S_N = [s_1, s_2, ..., s_N]$ and $s_N$ is assumed to be sample points first sent out (which are to be first reflected back). A set containing M candidate subsequences $\{S_K\}$, $K = N, \left\lfloor \frac{M-1}{M}N \right\rfloor, \left\lfloor \frac{M-2}{M}N \right\rfloor, ..., \left\lfloor \frac{1}{M}N \right\rfloor$ can be designed, and the maximum number of enumerations for I-RX detection is reduced from $N$ to $M$. An appropriate value of M is selected to find an appropriate $i$, so as to achieve better detection performance while minimizing the overheads for $S_{\left\lfloor \frac{M-i}{M}N \right\rfloor}$.

Optionally, during detection on the target subsequence in the at least one subsequence, detection may be performed only on subsequences. i indicates a value obtained through traversal, for example, i=0.1, 2, ..., and so on. Based on different values of i, subsequences of different lengths are obtained.

An appropriate i may indicate that an f(.) value is greater than an f(.) value for i-1 and an f(.) value for i+1, meaning that the maximum value of f(.) surely falls between (i-1, i+1). In this case, searching (full sequence) is performed on values of start positions of all possible sample points in this range to obtain a delay value with the highest accuracy.

Optionally, the performing detection on a target subsequence in the at least one subsequence includes:

performing matched filtering calculation on the at least one subsequence; and
determining the target subsequence based on a result of the matched filtering calculation.

Optionally, to further improve the accuracy, further searching may be performed. It is assumed that $f(x, y)$

denotes normalized matched filtering calculation for two sequences x and y. When i is found such that $S_{\left\lfloor \frac{M-i}{M} N \right\rfloor}$

satisfies: $f\left(S_{\left\lfloor \frac{M-i}{M} N \right\rfloor}, Y_{\left\lfloor \frac{M-i}{M} N \right\rfloor}\right) > f\left(S_{\left\lfloor \frac{M-i-1}{M} N \right\rfloor}, Y_{\left\lfloor \frac{M-i-1}{M} N \right\rfloor}\right)$ and

$f\left(S_{\left\lfloor \frac{M-i}{M} N \right\rfloor}, Y_{\left\lfloor \frac{M-i}{M} N \right\rfloor}\right) > f\left(S_{\left\lfloor \frac{M-i+1}{M} N \right\rfloor}, Y_{\left\lfloor \frac{M-i+1}{M} N \right\rfloor}\right)$ , it can be determined that the best related se-

quence $S_{\left\lfloor \frac{t_{2d}}{t_s} \right\rfloor}$ satisfies $\frac{t_{2d}}{t_s} \in \left(\frac{M-i-1}{M} N, \frac{M-i+1}{M} N\right)$ In this way, transversal searching may be performed

for $\forall_j$, $j \in \left(\frac{M-i-1}{M} N, \frac{M-i+1}{M} N\right)$ until $j$ making $f(S_j, Y_j)$ maximized is found, so as to obtain the bidirectional delay with accuracy of the symbol time level, that is, $t_{2d} = jt_s$.

Assuming that the UE sends a signal with four sample points [s1, s2, s3, s4], with a sample point time interval being one time unit t,
a time required for sending the target signal by the UE is 4t. In half-duplex mode, the UE can switch to a sensing receive state only after completing transmission. Assuming that the bidirectional propagation delay $t_{2d}$ = 2t, when the UE completes transmission, only sample points [s3', s4'] of the echo signal in the last 2t time can be received; in this case, the optimal matched filtering sequence is [s3 s4]. However, because the UE does not know $t_{2d}$=2t, the UE needs to perform traversal detection, to be specific, using all [s1, s2, s3, s4], [s2, s3, s4], and [s3, s4] to make matched filtering attempts, and finally using the one that results in the largest value as a correct sequence.

In this way, when the number of sample points is large, too many subsequences need to be traversed. Therefore, in the embodiments of this application, the number of hypothesis detections can be reduced.

For example, for sample points of [s1,s2,...,s10], N=10, and M=4, then floor([(M-1)/M]*10)=7, floor([(M-2)/M]*10)=5, and floor([(M-3)/M]*10)=2, that is, the subsequences S10=[s1,s2,s3,s4,s5,s6,s7,s8,s9,s10], S7=[s4,s5,s6,s7,s8,s9,s10], and SS=[s6,s7,s8,s9,s10],S2=[s9,s10] can be first used for matched filtering detection. If the optimal result is obtained using S5, it can be considered that the optimal match result is between S7 and S2, without containing S7 and S2. In this case, S6, S4, and S3 are traversed again and compared against the result of S5 so as to obtain the optimal match result.

Optionally, the performing detection on a target subsequence in the at least one subsequence includes at least one of the following:

determining a detection order for the target subsequence; and
determining a detection threshold, and determining the target subsequence based on the detection threshold.

Optionally, it may be possible to further reduce the number of enumerations by properly selecting an order of the subsequences to be used for detection as well as a threshold for detection of the sensing signal. Therefore, detection on the target subsequence in the at least one subsequence can be performed to reduce the number of enumerations.

Optionally, during detection on the target subsequence in the at least one subsequence, a detection order for the target subsequence may be determined.

Optionally, during detection on the target subsequence in the at least one subsequence, a detection threshold may be determined, the target subsequence is determined based on the detection threshold.

Optionally, during detection on the target subsequence in the at least one subsequence, the speed of subsequence searching may be improved based on at least one of the following:

random pick;
reverse/orthogonal pick in ascending order or descending order of sequence lengths; and
bi-section search.

In this embodiment of this application, the target signal transmitted for communication is considered as both a communication signal and sensing information, and a new communication frame structure is defined for transmission of the target signal, so as to implement that communication and sensing share a protocol stack, radio frequency, and frequency spectrum and operate in a half-duplex mode, avoiding interference between the communication signal and the sensing signal. This also implements a compact ISAC frame structure, reducing communication overheads and resources.

It should be noted that, for the transmission method provided by the embodiments of this application, the execution body may be a transmission apparatus, or a control module for executing the transmission method in the transmission apparatus. In the embodiments of this application, the transmission method being performed by the transmission apparatus is used as an example to describe the transmission apparatus provided in the embodiments of this application.

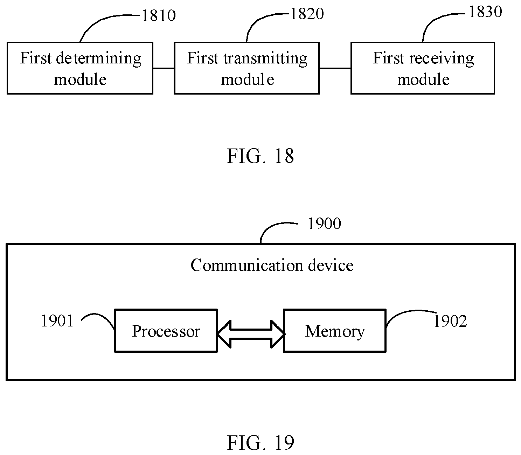

FIG. 18 is a schematic structural diagram of a transmission apparatus according to an embodiment of this application. As shown in FIG. 18, the apparatus includes: a first determining module 1810, a first transmitting module 1820, and a first receiving module 1830.

The first determining module 1810 is configured to determine a communication frame for transmitting a target signal, where the communication frame includes a first portion for transmitting a target signal and a second portion for receiving a sensing signal, the sensing signal is an echo signal for the target signal.

The first transmitting module 1820 is configured to transmit the target signal within the first portion of the communication frame.

The first receiving module 1830 is configured to receive the sensing signal within the second portion of the communication frame.

Optionally, the transmission apparatus may transmit the communication frame of the target signal through the first determining module 1810, the communication frame includes a first portion for transmitting a target signal and a second portion for receiving a sensing signal, the sensing signal is an echo signal for the target signal; transmits the target signal within the first portion of the communication frame through the first transmitting module 1820; and receives the sensing signal within the second portion of the communication frame through the first receiving module 1830.

In the embodiments of this application, the target signal transmitted for communication is considered as both a communication signal and sensing information, and a new communication frame structure is defined for transmission of the target signal, so as to implement that communication and sensing share a protocol stack, radio frequency, and frequency spectrum and operate in a half-duplex mode, avoiding interference between the communication signal and the sensing signal. This also implements a compact ISAC frame structure, reducing communication overheads and resources.

Optionally, the second portion is located after the first portion and a sum of lengths of the first portion and the second portion is a fixed value.

Optionally, the length of the second portion is a length of a minimum sensing distance.

Optionally, beams used for a plurality of consecutive communication frames are not all the same or are all different.

Optionally, the apparatus further includes:

a second transmitting module, configured to transmit target signals in the plurality of consecutive communication frames based on a same directional beam after a first position of the target object is determined, and updating the directional beam after it is determined that the target object has changed from the first position to a second position.

Optionally, the second portion is located after the first portion and a length of the first portion is a fixed value.

Optionally, a length of the second portion is a length of a maximum sensing distance.

Optionally, the apparatus further includes at least one of the following:

a first indication module, configured to indicate a position of the communication frame to the communication peer end; and
a second indication module, configured to indicate the length of the second portion to the communication peer end.

Optionally, the first indication module is further configured to perform at least one of the following:

indicating, based on a first period, a start position of the communication frame;
indicating, based on a first signal, the position of the communication frame;
updating, based on the first signal, the position of the communication frame; and

indicating, based on a first index, the position of the communication frame, where the first index corresponds to the position of the communication frame in a position index table, the position index table includes at least one second index, different indexes correspond to different positions, and the first index is one of the at least one second index.

Optionally, the second indication module is further configured to perform at least one of the following:

directly indicating the length of the second portion;
indicating, based on a third index, the length of the second portion, where the third index corresponds to the length of the second portion in a time-length index table, the time-length index table includes at least one fourth index, different fourth indexes correspond to different lengths, and the third index is one of the at least one fourth index; and
directly indicating the number of sample points of a data portion of the target signal.

Optionally, the first determining module is further configured to:

determine a minimum sensing distance of the communication device; and
based on the minimum sensing distance, adjust a transmission time of the target signal so that the length of the first portion is less than or equal to the minimum sensing distance.

Optionally, the apparatus further includes:

a fourth determining module, configured to determine at least one subsequence of the echo signal, where the subsequence includes at least two consecutive data sample points in the echo signal; and
a detection module, configured to perform detection on a target subsequence in the at least one subsequence.

Optionally, the detection module is further configured to:

perform matched filtering calculation on the at least one subsequence; and
determine the target subsequence based on a result of the matched filtering calculation.

Optionally, the detection module is further configured to:

determine a detection order for the target subsequence; and
determine a detection threshold, and determine the target subsequence based on the detection threshold.

In this embodiment of this application, the target signal transmitted for communication is considered as both a communication signal and sensing information, and a new communication frame structure is defined for transmission of the target signal, so as to implement that communication and sensing share a protocol stack, radio frequency, and frequency spectrum and operate in a half-duplex mode, avoiding interference between the communication signal and the sensing signal. This also implements a compact ISAC frame structure, reducing communication overheads and resources.

The transmission apparatus in this embodiment of this application may be an apparatus, or an apparatus or electric device having an operating system, or may be a component, an integrated circuit, or a chip in the terminal. The apparatus or electric device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

The transmission apparatus provided in this embodiment of this application can implement the processes implemented in the method embodiment in FIG. 2 to FIG. 17, with the same technical effects achieved. To avoid repetition, details are not described herein again.

Optionally, FIG. 19 is a schematic structural diagram of a communication device according to an embodiment of this application. As shown in FIG. 19, an embodiment of this application further provides a communication device 1900, including a processor 1901, a memory 1902, and a program or instructions stored in the memory 1902 and executable on the processor 1901. For example, when the communication device 1900 is a terminal and when the program or the instructions are executed by the processor 1901, the processes of the foregoing embodiment of the transmission method are implemented, with the same technical effects achieved. When the communication device 1900 is a network-side device and when the program or the instructions are executed by the processor 1901, the processes of the foregoing embodiment of the transmission method are implemented, with the same technical effects achieved.

To avoid repetition, details are not described herein again.

Optionally, the communication device may be a terminal; and its communication peer end may be a network-side device or another terminal.

Optionally, the communication device may be a network-side device, such as a base station; and its communication peer end may be a terminal.

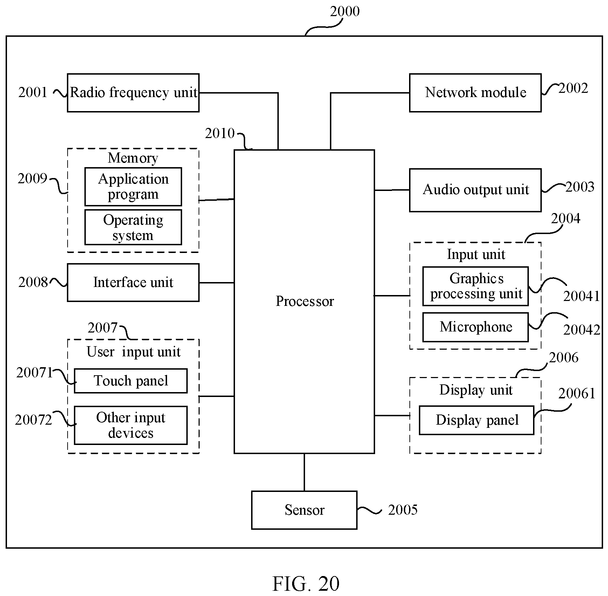

An embodiment of this application further provides a terminal, including a processor and a communication interface, where the processor is configured to transmit a communication frame of a target signal, and the communication frame includes a first portion for transmitting a target signal and a second portion for receiving a sensing signal, the sensing signal is an echo signal for the target signal; and the communication interface is configured to transmit the target signal within the first portion of the communication frame; and receive the sensing signal within the second portion of the communication frame. The terminal embodiments correspond to the foregoing terminal-side method embodiments, and the implementation processes and implementations of the foregoing method embodiments can be applied to the terminal embodiments, with the same technical effects achieved. Specifically, FIG. 20 is a schematic diagram of a hardware structure of a terminal for implementing the embodiments of this application.

The terminal 2000 includes but is not limited to at least part of components such as a radio frequency unit 2001, a network module 2002, an audio output unit 2003, an input unit 2004, a sensor 2005, a display unit 2006, a user input unit 2007, an interface unit 2008, a memory 2009, and a processor 2010.

Persons skilled in the art can understand that the terminal 2000 may further include a power supply (for example, a battery) supplying power to the components, and the power supply may be logically connected to the processor 2010 through a power management system. In this way, functions such as charge management, discharge management, and power consumption management are implemented by using the power management system. The structure of the terminal shown in FIG. 20 does not constitute any limitation on the terminal. The terminal may include more or fewer components than those shown in the figure, or a combination of some components, or the components disposed differently. Details are not described herein again.

It can be understood that in this embodiment of this application, the input unit 2004 may include a graphics processing unit (Graphics Processing Unit, GPU) 20041 and a microphone 20042. The graphics processing unit 20041 processes image data of a still picture or video obtained by an image capture apparatus (such as a camera) in a video capture mode or an image capture mode. The display unit 2006 may include a display panel 20061, and the display panel 20061 may be configured in a form of a liquid crystal display, an organic light-emitting diode, and the like. The user input unit 2007 may include a touch panel 20071 and other input devices 20072. The touch panel 20071 is also referred to as a touchscreen. The touch panel 20071 may include two parts: a touch detection apparatus and a touch controller. The other input devices 20072 may include but are not limited to a physical keyboard, a function key (such as a volume control key or a power on/off key), a trackball, a mouse, a joystick, and the like. Details are not described herein.

In this embodiment of this application, the radio frequency unit 2001 receives downlink data from a network-side device, and then sends the downlink data to the processor 2010 for processing; and also sends uplink data to the network-side device. Generally, the radio frequency unit 2001 includes but is not limited to an antenna, at least one amplifier, a transceiver, a coupler, a low noise amplifier, a duplexer, and the like.

The memory 2009 may be configured to store software programs or instructions and various data. The memory 2009 may include a program or instruction storage area and a data storage area. The program or instruction storage area may store an operating system, an application program or instruction required by at least one function (for example, a sound playback function or an image playback function), and the like. In addition, the memory 2009 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another volatile solid-state storage device.

The processor 2010 may include one or more processing units. Optionally, an application processor and a modem processor may be integrated in the processor 2010. The application processor primarily processes an operating system, user interfaces, application programs or instructions, and the like. The modem processor primarily processes radio communication, for example, being a baseband processor. It can be understood that the modem processor may alternatively be not integrated in the processor 2010.

The processor 2010 is configured to:

determine, by a communication device, a communication frame for transmitting a target signal, where the communication frame includes a first portion for transmitting a target signal and a second portion for receiving a sensing signal, the sensing signal is an echo signal for the target signal;

transmit, by the communication device, the target signal within the first portion of the communication frame; and

receive, by the communication device, the sensing signal within the second portion of the communication frame.

In this embodiment of this application, the target signal transmitted for communication is considered as both a communication signal and sensing information, and a new communication frame structure is defined for transmission of the target signal, so as to implement that communication and sensing share a protocol stack, radio frequency, and frequency spectrum and operate in a half-duplex mode, avoiding interference between the communication signal and the sensing signal. This also implements a compact ISAC frame structure, reducing communication overheads and resources.

Optionally, the second portion is located after the first portion and a sum of lengths of the first portion and the second portion is a fixed value.

Optionally, the length of the second portion is a length of a minimum sensing distance.

Optionally, beams used for a plurality of consecutive communication frames are not all the same or are all different.

Optionally, the processor 2010 is further configured to:

transmit target signals in the plurality of consecutive communication frames based on a same directional beam after a first position of the target object is determined, and update the directional beam after it is determined that the target object has changed from the first position to a second position.

Optionally, the second portion is located after the first portion and a length of the first portion is a fixed value.

Optionally, a length of the second portion is a length of a maximum sensing distance.

Optionally, the processor 2010 is further configured to perform at least one of the following:

indicating, by the communication device, a position of the communication frame to the communication peer end; and
indicating, by the communication device, the length of the second portion to the communication peer end.

Optionally, the processor 2010 is further configured to perform at least one of the following:

indicating, based on a first period, a start position of the communication frame;
indicating, based on a first signal, the position of the communication frame;
updating, based on the first signal, the position of the communication frame; and
indicating, based on a first index, the position of the communication frame, where the first index corresponds to the position of the communication frame in a position index table, the position index table includes at least one second index, different indexes correspond to different positions, and the first index is one of the at least one second index.

Optionally, the processor 2010 is further configured to perform at least one of the following:

directly indicating the length of the second portion;
indicating, based on a third index, the length of the second portion, where the third index corresponds to the length of the second portion in a time-length index table, the time-length index table includes at least one fourth index, different fourth indexes correspond to different lengths, and the third index is one of the at least one fourth index; and
directly indicating the number of sample points of a data portion of the target signal.

Optionally, the processor 2010 is further configured to:

determine a minimum sensing distance of the communication device; and
based on the minimum sensing distance, adjust a transmission time of the target signal so that the length of the first portion is less than or equal to the minimum sensing distance.

Optionally, the processor 2010 is further configured to:

determine at least one subsequence of the echo signal, where the subsequence includes at least two consecutive data sample points in the echo signal; and
perform detection on a target subsequence in the at least one subsequence.

Optionally, the processor 2010 is further configured to:

perform matched filtering calculation on the at least one subsequence; and
determine the target subsequence based on a result of the matched filtering calculation.

Optionally, the processor 2010 is further configured to perform at least one of the following:

determining a detection order for the target subsequence; and
determining a detection threshold, and determining the target subsequence based on the detection threshold.

In this embodiment of this application, the target signal transmitted for communication is considered as both a communication signal and sensing information, and a new communication frame structure is defined for transmission of the target signal, so as to implement that communication and sensing share a protocol stack, radio frequency, and frequency spectrum and operate in a half-duplex mode, avoiding interference between the communication signal and the sensing signal. This also implements a compact ISAC frame structure, reducing communication overheads and resources.

An embodiment of this application further provides a network-side device, including a processor and a communication interface, where the processor is configured to transmit a communication frame of a target signal, and the communication frame includes a first portion for transmitting a target signal and a second portion for receiving a sensing signal, the sensing signal is an echo signal for the target signal; and the communication interface is configured to transmit the target signal within the first portion of the communication frame; and receive the sensing signal within the second portion of the communication frame. The network-side device embodiments correspond to the foregoing network-side device method embodiments, and the implementation processes and implementations of the foregoing method embodiments can be applied to the network-side device embodiments, with the same technical effects achieved.

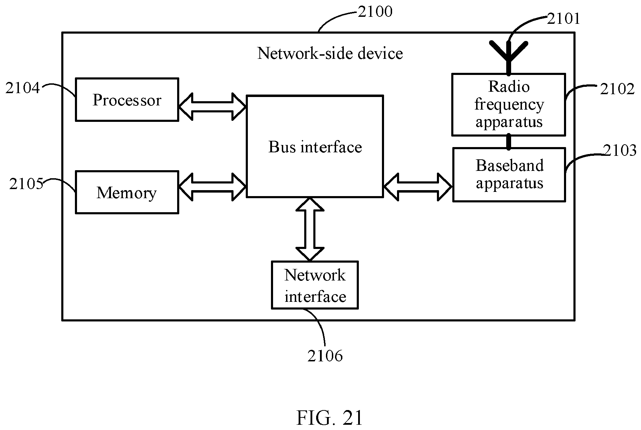

Specifically, an embodiment of this application further provides a network-side device. FIG. 21 is a schematic diagram of a hardware structure of a network-side device for implementing the embodiments of this application. As shown in FIG. 21, the network-side device 2100 includes an antenna 2101, a radio frequency apparatus 2102, and a baseband apparatus 2103. The antenna 2101 is connected to the radio frequency apparatus 2102. In an uplink direction, the radio frequency apparatus 2102 receives information by using the antenna 2101, and sends the received information to the baseband apparatus 2103 for processing. In a downlink direction, the baseband apparatus 2103 processes to-be-sent information, and sends the information to the radio frequency apparatus 2102; and the radio frequency apparatus 2102 processes the received information and then sends the information out by using the antenna 2101.

The frequency band processing apparatus may be located in the baseband apparatus 2103. The method performed by the network-side device in the foregoing embodiments may be implemented in the baseband apparatus 2103, and the baseband apparatus 2103 includes a processor 2104 and a memory 2105.

The baseband apparatus 2103 may include, for example, at least one baseband board, where a plurality of chips are disposed on the baseband board. As shown in FIG. 21, one of the chips, for example, the processor 2104, is connected to the memory 2105, to invoke a program in the memory 2105 to perform the operation of the network device shown in the foregoing method embodiments.

The baseband apparatus 2103 may further include a network interface 2106, configured to exchange information with the radio frequency apparatus 2102, where the interface is, for example, a common public radio interface (common public radio interface, CPRI for short).

Specifically, the network-side device in this embodiment of the present invention further includes: instructions or a program stored in the memory 2105 and executable on the processor 2104. The processor 2104 invokes the instructions or program in the memory 2105 to execute the method executed by the modules shown in FIG. 18, with the same technical effects achieved. To avoid repetition, details are not repeated herein.

The processor 2104 is configured to:

determine, by a communication device, a communication frame for transmitting a target signal, where the communication frame includes a first portion for transmitting a target signal and a second portion for receiving a sensing signal, the sensing signal is an echo signal for the target signal;
transmit, by the communication device, the target signal within the first portion of the communication frame; and
receive, by the communication device, the sensing signal within the second portion of the communication frame.

In this embodiment of this application, the target signal transmitted for communication is considered as both a communication signal and sensing information, and a new communication frame structure is defined for transmission of the target signal, so as to implement that communication and sensing share a protocol stack, radio frequency, and frequency spectrum and operate in a half-duplex mode, avoiding interference between the communication signal and the sensing signal. This also implements a compact ISAC frame structure, reducing communication overheads and resources.

Optionally, the second portion is located after the first portion and a sum of lengths of the first portion and the second portion is a fixed value.

Optionally, the length of the second portion is a length of a minimum sensing distance.

Optionally, beams used for a plurality of consecutive communication frames are not all the same or are all different.

Optionally, the processor 2104 is further configured to:

transmit target signals in the plurality of consecutive communication frames based on a same directional beam after a first position of the target object is determined, and update the directional beam after it is determined that the target object has changed from the first position to a second position.

Optionally, the second portion is located after the first portion and a length of the first portion is a fixed value.

Optionally, a length of the second portion is a length of a maximum sensing distance.

Optionally, the processor 2104 is further configured to perform at least one of the following:

indicating, by the communication device, a position of the communication frame to the communication peer end; and
indicating, by the communication device, the length of the second portion to the communication peer end.

Optionally, the processor 2104 is further configured to perform at least one of the following:

indicating, based on a first period, a start position of the communication frame;
indicating, based on a first signal, the position of the communication frame;
updating, based on the first signal, the position of the communication frame; and
indicating, based on a first index, the position of the communication frame, where the first index corresponds to the position of the communication frame in a position index table, the position index table includes at least one second index, different indexes correspond to different positions, and the first index is one of the at least one second index.

Optionally, the processor 2104 is further configured to perform at least one of the following:

directly indicating the length of the second portion;
indicating, based on a third index, the length of the second portion, where the third index corresponds to the length of the second portion in a time-length index table, the time-length index table includes at least one fourth index, different fourth indexes correspond to different lengths, and the third index is one of the at least one fourth index; and
directly indicating the number of sample points of a data portion of the target signal.

Optionally, the processor 2104 is further configured to:

determine a minimum sensing distance of the communication device; and
based on the minimum sensing distance, adjust a transmission time of the target signal so that the length of the first portion is less than or equal to the minimum sensing distance.

Optionally, the processor 2104 is further configured to:

determine at least one subsequence of the echo signal, where the subsequence includes at least two consecutive data sample points in the echo signal; and
perform detection on a target subsequence in the at least one subsequence.

Optionally, the processor 2104 is further configured to:

perform matched filtering calculation on the at least one subsequence; and
determine the target subsequence based on a result of the matched filtering calculation.

Optionally, the processor 2104 is further configured to perform at least one of the following:

determining a detection order for the target subsequence; and
determining a detection threshold, and determining the target subsequence based on the detection threshold.

In this embodiment of this application, the target signal transmitted for communication is considered as both a communication signal and sensing information, and a new communication frame structure is defined for transmission of the target signal, so as to implement that communication and sensing share a protocol stack, radio frequency, and frequency spectrum and operate in a half-duplex mode, avoiding interference between the communication signal and the sensing signal. This also implements a compact ISAC frame structure, reducing communication overheads and resources.

An embodiment of this application further provides a readable storage medium, where a program or instructions are stored in the readable storage medium. When the program or the instructions are executed by a processor, the processes of the foregoing embodiment of the transmission method can be implemented, with the same technical effects achieved. To avoid repetition, details are not described herein again.

The processor is a processor in the terminal described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communication interface. The communication interface is coupled to the processor, and the processor is configured to run a program or instructions to implement the processes of the foregoing transmission method embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

It should be noted that in this specification, the term "include", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

**Claims**

1. A transmission method, comprising:

    determining, by a communication device, a communication frame for transmitting a target signal, wherein the communication frame comprises a first portion for transmitting a target signal and a second portion for receiving a sensing signal, the sensing signal is an echo signal for the target signal;
    transmitting, by the communication device, the target signal within the first portion of the communication frame; and
    receiving, by the communication device, the sensing signal within the second portion of the communication frame.

2. The transmission method according to claim 1, wherein the second portion is located after the first portion and a sum of lengths of the first portion and the second portion is a fixed value.

3. The transmission method according to claim 2, wherein the length of the second portion is a length of a minimum sensing distance.

4. The transmission method according to claim 2, wherein beams used for a plurality of consecutive communication frames are not all the same or are all different.

5. The transmission method according to claim 4, wherein the method further comprises:
transmitting target signals in the plurality of consecutive communication frames based on a same directional beam after a first position of the target object is determined, and updating the directional beam after it is determined that the target object has changed from the first position to a second position.

6. The transmission method according to claim 1, wherein the second portion is located after the first portion and a length of the first portion is a fixed value.

7. The transmission method according to claim 6, wherein a length of the second portion is a length of a maximum sensing distance.

8. The transmission method according to any one of claims 2 to 7, wherein the method further comprises at least one of following:

indicating, by the communication device, a position of the communication frame to the communication peer end; and
indicating, by the communication device, the length of the second portion to the communication peer end.

9. The transmission method according to claim 8, wherein the indicating a position of the communication frame to the communication peer end comprises at least one of following:

indicating, based on a first period, a start position of the communication frame;
indicating, based on a first signal, the position of the communication frame;
updating, based on the first signal, the position of the communication frame; and
indicating, based on a first index, the position of the communication frame, wherein the first index corresponds to the position of the communication frame in a position index table, the position index table comprises at least one second index, different indexes correspond to different positions, and the first index is one of the at least one second index.

10. The transmission method according to claim 8, wherein the indicating the length of the second portion to the communication peer end comprises at least one of following:

directly indicating the length of the second portion;
indicating, based on a third index, the length of the second portion, wherein the third index corresponds to the length of the second portion in a time-length index table, the time-length index table comprises at least one fourth index, different fourth indexes correspond to different lengths, and the third index is one of the at least one fourth index; and
directly indicating the number of sample points of a data portion of the target signal.

11. The transmission method according to any one of claims 1 to 7 or claim 9 or 10, wherein the determining a communication frame for transmitting a target signal further comprises:

determining a minimum sensing distance of the communication device; and
based on the minimum sensing distance, adjusting a transmission time of the target signal so that the length of the first portion is less than or equal to the minimum sensing distance.

12. The transmission method according to any one of claims 1 to 7 or claim 9 or 10, wherein the method further comprises:

determining at least one subsequence of the echo signal, wherein a subsequence comprises at least two consecutive data sample points in the echo signal; and
performing detection on a target subsequence in the at least one subsequence.

13. The transmission method according to claim 12, wherein the performing detection on a target subsequence in the at least one subsequence comprises:

performing matched filtering calculation on the at least one subsequence; and
determining the target subsequence based on a result of the matched filtering calculation.

14. The transmission method according to claim 12, wherein the performing detection on a target subsequence in the at least one subsequence comprises at least one of following:

   determining a detection order for the target subsequence; and
   determining a detection threshold, and determining the target subsequence based on the detection threshold.

15. A transmission apparatus, comprising:

   a first determining module, configured to determine a communication frame for transmitting a target signal, wherein the communication frame comprises a first portion for transmitting a target signal and a second portion for receiving a sensing signal, the sensing signal is an echo signal for the target signal;
   a first transmitting module, configured to transmit the target signal within the first portion of the communication frame; and
   a first receiving module, configured to receive the sensing signal within the second portion of the communication frame.

16. The transmission apparatus according to claim 15, wherein the second portion is located after the first portion and a sum of lengths of the first portion and the second portion is a fixed value.

17. The transmission apparatus according to claim 16, wherein the length of the second portion is a length of a minimum sensing distance.

18. The transmission apparatus according to claim 16, wherein beams used for a plurality of consecutive communication frames are not all the same or are all different.

19. The transmission apparatus according to claim 18, wherein the apparatus further comprises:
   a second transmitting module, configured to transmit target signals in the plurality of consecutive communication frames based on a same directional beam after a first position of the target object is determined, and update the directional beam after it is determined that the target object has changed from the first position to a second position.

20. The transmission apparatus according to claim 15, wherein the second portion is located after the first portion and a length of the first portion is a fixed value.

21. The transmission apparatus according to claim 20, wherein the length of the second portion is a length of a maximum sensing distance.

22. The transmission apparatus according to any one of claims 16 to 21, wherein the apparatus further comprises at least one of following:

   a first indication module, configured to indicate a position of the communication frame to the communication peer end; and
   a second indication module, configured to indicate the length of the second portion to the communication peer end.

23. The transmission apparatus according to claim 22, wherein the first indication module is further configured to perform at least one of following:

   indicating, based on a first period, a start position of the communication frame;
   indicating, based on a first signal, the position of the communication frame;
   updating, based on the first signal, the position of the communication frame; and
   indicating, based on a first index, the position of the communication frame, wherein the first index corresponds to the position of the communication frame in a position index table, the position index table comprises at least one second index, different indexes correspond to different positions, and the first index is one of the at least one second index.

24. The transmission apparatus according to claim 22, wherein the second indication module is further configured to perform at least one of following:

directly indicating the length of the second portion;

indicating, based on a third index, the length of the second portion, wherein the third index corresponds to the length of the second portion in a time-length index table, the time-length index table comprises at least one fourth index, different fourth indexes correspond to different lengths, and the third index is one of the at least one fourth index; and

directly indicating the number of sample points of a data portion of the target signal.

25. The transmission apparatus according to any one of claims 15 to 21 or claim 23 or 24, wherein the first determining module is further configured to:

determine a minimum sensing distance of the communication device; and

based on the minimum sensing distance, adjust a transmission time of the target signal so that the length of the first portion is less than or equal to the minimum sensing distance.

26. The transmission apparatus according to any one of claims 15 to 21 or claim 23 or 24, wherein the apparatus further comprises:

a fourth determining module, configured to determine at least one subsequence of the echo signal, wherein a subsequence comprises at least two consecutive data sample points in the echo signal; and

a detection module, configured to perform detection on a target subsequence in the at least one subsequence.

27. The transmission apparatus according to claim 26, wherein the detection module is further configured to:

perform matched filtering calculation on the at least one subsequence; and

determine the target subsequence based on a result of the matched filtering calculation.

28. The transmission apparatus according to claim 26, wherein the detection module is further configured to:

determine a detection order for the target subsequence; and

determine a detection threshold, and determine the target subsequence based on the detection threshold.

29. A communication device, comprising a processor, a memory, and a program or instructions stored in the memory and executable on the processor, wherein when the program or the instructions are executed by the processor, steps of the transmission method according to any one of claims 1 to 14 are implemented.

30. A readable storage medium, wherein the readable storage medium stores a program or instructions, and when the program or the instructions are executed by a processor, steps of the transmission method according to any one of claims 1 to 14 are implemented.

FIG. 1

FIG. 2

Time-domain pulse response

$g(t,\tau)$

$\mathcal{F}$      $\mathcal{F}$

Time-domain
response
(OFDM)

$H(t,f)$   SFFT  →  $h(\nu,\tau)$

Delay-Doppler
response
(OTFS)

$\mathcal{F}$      $\mathcal{F}$

$B(\nu,f)$

Doppler-variant response (OTFS)

FIG. 3

Time-frequency domain   ($N$ OFDM symbols)

$x[k,l]$ → Precoding (ISFFT) → $X[n,m]$ → OFDM Modulator → $s(t)$ → Channel $H(t,f)$ → $r(t)$ → OFDM Demodulator → $Y[n,m]$ → Decoder (SFFT) → $y[k,l]$

Delay-Doppler domain

FIG. 4

FIG. 5

FIG. 6

FIG. 7

A communication device determines a communication frame for transmitting a target signal, where the communication frame includes a first portion for transmitting a target signal and a second portion for receiving a sensing signal, the sensing signal being an echo signal for the target signal — 810

The communication device transmits the target signal within the first portion of the communication frame — 820

The communication device receives the sensing signal within the second portion of the communication frame — 830

FIG. 8

FIG. 9

FIG. 10

FIG. 11

Delay-Doppler mapping

Inverse symplectic Fourier transform

Time-frequency domain mapping

FIG. 12

| C | I | G | C |
|---|---|---|---|

FIG. 13

| I | G | I | G | I | G | ... ... | I | G |
|---|---|---|---|---|---|---|---|---|

Beam 1　　Beam 2　　Beam 3　　　　Beam L

FIG. 14

| ISB 1 | ISB 2 | ISB 3 | ... ... | ISB N |
|---|---|---|---|---|
| BS 1 | BS 2 | BS 3 | | BS 4 |

| I | G | I | G | ... ... | I | G |
|---|---|---|---|---|---|---|

Beam 1　　Beam 2　　　　Beam L

FIG. 15

| I | G | C | C | ... ... | I | G |
|---|---|---|---|---|---|---|

Beam (t)　　Beam (t)　　Beam (t)　　　Beam (t+1)

FIG. 16

| C | I | G | C |
|---|---|---|---|

FIG. 17

| First determining module —1810 | First transmitting module —1820 | First receiving module —1830 |
| --- | --- | --- |

**FIG. 18**

**Communication device — 1900**

1901 — Processor ⇔ Memory — 1902

**FIG. 19**

2000

| 2001 | Radio frequency unit | | Network module | 2002 |

Memory — 2009

Application program

Operating system

2010

Processor

2008 — Interface unit

2007

User input unit

20071 — Touch panel

20072 — Other input devices

Network module — 2002

Audio output unit — 2003

2004

Input unit

Graphics processing unit — 20041

Microphone — 20042

2006

Display unit — 20061

Display panel

Sensor — 2005

FIG. 20

FIG. 21

**INTERNATIONAL SEARCH REPORT**

| International application No. |
| --- |
| **PCT/CN2022/103828** |

**A. CLASSIFICATION OF SUBJECT MATTER**

H04W 72/04(2009.01)i

According to International Patent Classification (IPC) or to both national classification and IPC

**B. FIELDS SEARCHED**

Minimum documentation searched (classification system followed by classification symbols)

H04W; H04Q

Documentation searched other than minimum documentation to the extent that such documents are included in the fields searched

Electronic data base consulted during the international search (name of data base and, where practicable, search terms used)

CNPAT; CNKI; WPI; EPODOC; 3GPP: 感知, 感测, 帧结构, 信号, 回波, 反射, 上行, 下行, sensing, frame structure, signal, echo, reflect+, uplink, downlink

**C. DOCUMENTS CONSIDERED TO BE RELEVANT**

| Category* | Citation of document, with indication, where appropriate, of the relevant passages | Relevant to claim No. |
| --- | --- | --- |
| X | US 2021076417 A1 (BAYESTEH, A. et al.) 11 March 2021 (2021-03-11) description, paragraphs 48-192, and figures 1-9 | 1-30 |
| E | CN 114867110 A (DATANG MOBILE COMMUNICATIONS EQUIPMENT CO., LTD.) 05 August 2022 (2022-08-05) description, paragraphs 156-332, and figures 1-12 | 1-2, 6, 15-16, 20, 29-30 |
| PX | CN 114584988 A (HUAWEI TECHNOLOGIES CO., LTD.) 03 June 2022 (2022-06-03) description, paragraphs 48-123 | 1, 15, 29-30 |
| A | CN 109507661 A (THE 10TH RESEARCH INSTITUTE OF CHINA ELECTRONICS TECHNOLOGY GROUP CORP.) 22 March 2019 (2019-03-22) entire document | 1-30 |
| A | CN 112748425 A (HUAWEI TECHNOLOGIES CO., LTD.) 04 May 2021 (2021-05-04) entire document | 1-30 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 August 2022** | **29 August 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/103828**

| Patent document cited in search report | | | Publication date (day/month/year) | Patent family member(s) | | | Publication date (day/month/year) |
|---|---|---|---|---|---|---|---|
| US | 2021076417 | A1 | 11 March 2021 | CN | 114303073 | A | 08 April 2022 |
| | | | | US | 2022030626 | A1 | 27 January 2022 |
| | | | | EP | 4022350 | A1 | 06 July 2022 |
| | | | | WO | 2021047284 | A1 | 18 March 2021 |
| CN | 114867110 | A | 05 August 2022 | None | | | |
| CN | 114584988 | A | 03 June 2022 | None | | | |
| CN | 109507661 | A | 22 March 2019 | None | | | |
| CN | 112748425 | A | 04 May 2021 | WO | 2021083368 | A1 | 06 May 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110779270